(19) **Europäisches Patentamt / European Patent Office / Office européen des brevets**

(11) **EP 4 307 062 B1**

(12) **EUROPEAN PATENT SPECIFICATION**

(45) Date of publication and mention of the grant of the patent:
**03.09.2025 Bulletin 2025/36**

(21) Application number: **22767039.5**

(22) Date of filing: **04.03.2022**

(51) International Patent Classification (IPC):
**G05B 19/418** (2006.01)    **C25B 9/00** (2021.01)
**C25B 15/00** (2006.01)    **C25B 1/46** (2006.01)
**G05B 19/042** (2006.01)

(52) Cooperative Patent Classification (CPC):
**C25B 1/46; C25B 15/00; C25B 15/023; C25B 15/031;** C25B 9/70

(86) International application number:
**PCT/JP2022/009510**

(87) International publication number:
**WO 2022/191082 (15.09.2022 Gazette 2022/37)**

(54) **OPERATION ASSISTANCE DEVICE, OPERATION ASSISTANCE SYSTEM, OPERATION ASSISTANCE METHOD, AND OPERATION ASSISTANCE PROGRAM FOR AN ELECTROLYTIC APPARATUS**

BEDIENUNGSASSISTENZVORRICHTUNG, BEDIENUNGSASSISTENZSYSTEM, BEDIENUNGSASSISTENZVERFAHREN UND BEDIENUNGSASSISTENZPROGRAMM FÜR EINE ELEKTROLYTISCHE VORRICHTUNG

DISPOSITIF, SYSTÈME, PROCÉDÉ ET PROGRAMME D'AIDE À L'UTILISATION D'UN APPAREIL ÉLECTROLYTQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2021 JP 2021036110**

(43) Date of publication of application:
**17.01.2024 Bulletin 2024/03**

(73) Proprietor: **Asahi Kasei Kabushiki Kaisha**
**Tokyo 1000006 (JP)**

(72) Inventors:
• **SASAKI, Takeaki**
**Tokyo 100-0006 (JP)**
• **ANAMI, Yasutaka**
**Tokyo 100-0006 (JP)**
• **SUGIMOTO, Manabu**
**Tokyo 100-0006 (JP)**

(74) Representative: **Hoffmann Eitle**
**Patent- und Rechtsanwälte PartmbB**
**Arabellastraße 30**
**81925 München (DE)**

(56) References cited:
WO-A1-01/61074          CN-A- 111 926 343
JP-A- 2013 061 819      JP-A- 2018 181 881
JP-A- 2019 019 408      US-A1- 2020 226 482

**Description**

BACKGROUND

1. TECHNICAL FIELD

The present invention relates to an operation assistance apparatus, an operation assistance system, an operation assistance method, and an operation assistance program.

2. RELATED ART

Patent Document 1 discloses that "a method for updating an ion exchange membrane according to the present embodiment includes a step of sandwiching the ion exchange membrane between an anode-side gasket and a cathode-side gasket, ..." (paragraph 0052). Further, Patent Document 2describes a method for determining the optimal operation period of an ionic membrane electrolytic cell comprising the following specific steps: obtaining power consumption for per ton of alkali during initial operation of an ionic membrane; obtaining the power consumption for per ton of alkali when the ionic membrane runs for N years; obtaining an increment of the power consumption for per ton of alkali when the ionic membrane runs for N years or comprehensive cost at the N year; and, when the increment of the power consumption for per ton of alkali or the comprehensive cost is equal to membrane replacement cost, taking the operation age limit of the ionic membrane as the optimal operation period. The ionic membrane is determined to be replaced by calculating the optimal membrane replacement period and taking actual operation process and other factors into consideration, so management is optimized, and cost is reduced.

CITATION LIST

PATENT DOCUMENT

Patent Document 1: Japanese Patent Application Publication No. 2019-19408

Patent Document 2: CN 111 926 343 A

TECHNICAL PROBLEM

In an electrolytic apparatus including an ion exchange membrane or the like, when the performance of the ion exchange membrane or the like deteriorates, the production efficiency of the product produced by the electrolytic apparatus is likely to be reduced. Therefore, it is desirable that the ion exchange membrane with deteriorated performance is replaced. On the other hand, when the ion exchange membrane is replaced, the functioning of the electrolytic apparatus may be stopped. When the functioning of the electrolytic apparatus is stopped, the product is not produced during the stopped period, so that the production amount of the product is smaller than that when the functioning of the electrolytic apparatus is not stopped. Therefore, it is preferable that the replacement of the ion exchange membrane is performed at timing when a cost related to the functioning of the electrolytic apparatus is minimized.

In a production plan of the product produced by the electrolytic apparatus, the production amount of the product may depend on the moment. Therefore, it is preferable that the replacement of the ion exchange membrane is performed at a moment when the production plan of the product can be satisfied. Therefore, it is desirable that the operation assistance apparatus which assists the operation of the electrolytic apparatus can specify the replacing moment of the ion exchange membrane at which the production plan of the product can be satisfied while the total cost associated with the functioning of the electrolytic apparatus is reduced as much as possible.

GENERAL DISCLOSURE

A first aspect of the present invention provides an operation assistance apparatus. The operation assistance apparatus includes the features of claim 1.

The plurality of electrolyzers each may include an anode chamber and a cathode chamber partitioned by the ion exchange membrane. An aqueous solution of an alkali metal chloride may be introduced into the anode chamber, and an aqueous solution of an alkali metal hydroxide may be discharged from the cathode chamber. The operation assistance apparatus may further include: a current calculation unit which calculates current which is supplied to each of the plurality of electrolyzers and at which a production amount of the product produced in the period by the plurality of electrolyzers is maximized, a power amount consumed in the period by the plurality of electrolyzers is minimized, mass of an alkali metal chloride, which is introduced into the anode chamber and is contained in the aqueous solution of the alkali metal hydroxide discharged from the cathode chamber, is minimized, or mass of oxygen contained in chlorine discharged from the anode chamber is minimized; and a current supply unit which supplies the current calculated by the current calculation unit to each of the plurality of electrolyzers.

The operation assistance apparatus may further include a power amount acquisition unit. The power amount acquisition unit may acquire a power amount for each of the plurality of electrolyzers to produce the product. The current calculation unit may calculate current at which the production amount of the product is maximized or the mass of the alkali metal chloride or the mass of the oxygen is minimized when the power amount is less than a predetermined power amount.

The operation assistance apparatus may further include an electrolyzer specification unit which specifies an electrolyzer, of which the power amount is maximum, among the plurality of electrolyzers.

The power amount acquisition unit may acquire the power amount in total in the plurality of electrolyzers

The electrolyzer specification unit may specify the electrolyzer, of which the power amount is maximum, when the power amount in total in the predetermined period is minimum.

The operation assistance apparatus may further include an electrolyzer specification unit which specifies an electrolyzer, of which current efficiency of the electrolyzer is the lowest, among the plurality of electrolyzers.

The current calculation unit may calculate current at which the production amount of the product is maximized or the power amount is minimized when the mass of the alkali metal chloride or the mass of the oxygen is at less than a predetermined concentration.

The current calculation unit may calculate the current, at which a total production amount of the product by the plurality of electrolyzers in the predetermined period is maximized, supplied to each of the plurality of electrolyzers.

The operation assistance apparatus may further include an electrolyzer specification unit. The production amount acquisition unit may further acquire a production amount of the product produced in the period by each of the plurality of electrolyzers. The production amount calculation unit may further calculate the production amount of the product produced in the period by each of the plurality of electrolyzers. The electrolyzer specification unit may specify an electrolyzer, of which the ion exchange membrane is to be updated, among the plurality of electrolyzers on a basis of the production amount of the product acquired by the production amount acquisition unit and the production amount of the product calculated by the production amount calculation unit.

The electrolyzer specification unit may specify an electrolyzer, in which the production amount of the product acquired by the production amount acquisition unit is minimum, among the plurality of electrolyzers.

An aqueous solution of an alkali metal chloride may be discharged from the anode chamber. The operation assistance apparatus may further include a pH acquisition unit which acquires a pH of the aqueous solution of the alkali metal chloride introduced into the anode chamber and a pH of the aqueous solution of the alkali metal chloride discharged from the anode chamber. The electrolyzer specification unit may specify an electrolyzer, of which the ion exchange membrane is to be updated, among the plurality of electrolyzers on the basis of the pH of the aqueous solution of the alkali metal chloride acquired by the pH acquisition unit.

The operation assistance apparatus may further include a deterioration speed acquisition unit which acquires a deterioration speed of the ion exchange membrane in each of the plurality of electrolyzers. The electrolyzer specification unit may specify an electrolyzer, of which the ion exchange membrane is to be updated, among the plurality of electrolyzers on the basis of the deterioration speed of the ion exchange membrane.

When a deterioration speed of one ion exchange membrane among ion exchange membranes including the ion exchange membrane in each of the plurality of electrolyzers is equal to or higher than a predetermined deterioration speed, the electrolyzer specification unit may specify the electrolyzer having the one ion exchange membrane.

The production amount calculation unit may further calculate a maximum production amount of the product when the one ion exchange membrane specified by the electrolyzer specification unit is updated. The period specification unit may further specify the period during which the maximum production amount becomes equal to or more than the target production amount.

The alkali metal chloride may be a sodium chloride or a potassium chloride. When the alkali metal chloride is a sodium chloride, the alkali metal hydroxide may be a sodium hydroxide. When the alkali metal chloride is a potassium chloride, the alkali metal hydroxide may be a potassium hydroxide.

A second aspect of the present invention provides an operation assistance system. The operation assistance system includes: the operation assistance apparatus; and the one electrolyzer or the plurality of electrolyzers.

A third aspect of the present invention provides an operation assistance method as defined in claim 13.

A fourth aspect of the present invention provides an operation assistance program as defined in claim 14.

The summary clause does not necessarily describe all necessary features of the embodiments of the present invention. The present invention may also be a sub-combination of the features described above.

BRIEF DESCRIPTION OF THE DRAWINGS

Fig. 1 is a view illustrating an example of an electrolytic apparatus 200 according to one embodiment of the present invention.

Fig. 2 is a view of the electrolytic apparatus 200 illustrated in Fig. 1 as viewed from an X-axis direction.

Fig. 3 is a view illustrating an example of details of one electrolysis cell 91 in Fig. 2.

Fig. 4 is an enlarged view of a vicinity of an ion exchange membrane 84 in the electrolysis cell 91 illustrated in Fig. 3.

Fig. 5 is a diagram illustrating an example of a block diagram of an operation assistance apparatus 100 according to one embodiment of the present invention.

Fig. 6 is a diagram illustrating an example of a relationship between a time period t and a production amount Pa and an example of a relationship between the time period t and a cost C.

Fig. 7 is a diagram illustrating another example of the block diagram of the operation assistance apparatus 100 according to one embodiment of the present invention.

Fig. 8 is a diagram illustrating another example of the block diagram of the operation assistance apparatus 100 according to one embodiment of the present invention.

Fig. 9 is a diagram illustrating another example of the block diagram of the operation assistance apparatus 100 according to one embodiment of the present invention.

Fig. 10 is a diagram illustrating an example of a display mode in a display unit 62.

Fig. 11 is a diagram illustrating an example of the display mode of the display unit 62 when a second condition Cd2 is selected.

Fig. 12 is a diagram illustrating an example of an operation condition Cda and an optimal operation condition Cdb.

Fig. 13 is a diagram illustrating another example of the display mode of the display unit 62 when the second condition Cd2 is selected.

Fig. 14 is a diagram illustrating another example of the display mode of the display unit 62 when a first condition Cd1 and the second condition Cd2 are selected.

Fig. 15 is a diagram illustrating another example of the display mode of the display unit 62 when the first condition Cd1 and the second condition Cd2 are selected.

Fig. 16 is a diagram illustrating an example of a relationship between the time period t and a power amount Pw in the case of the operation condition Cda and the optimal operation condition Cdb.

Fig. 17 is a diagram illustrating another example of the display mode of the display unit 62 when the first condition Cd1 and the second condition Cd2 are selected.

Fig. 18 is a diagram illustrating another example of the display mode of the display unit 62 when the first condition Cd1 and the second condition Cd2 are selected.

Fig. 19 is a diagram illustrating an example of a relationship between the time period t and the quality of a product P in the case of the operation condition Cda and the optimal operation condition Cdb.

Fig. 20 is a schematic diagram illustrating an example of a method of deriving the optimal operation condition Cdb.

Fig. 21 is a diagram illustrating an example of a relationship between the time period t and a cell voltage CV.

Fig. 22 is a diagram illustrating an example of a relationship between the time period t and current efficiency CE.

Fig. 23 is a flowchart illustrating an example of a method of deriving the optimal operation condition Cdb.

Fig. 24 is a diagram illustrating an example of an update moment of the ion exchange membrane 84 (see Fig. 3) in the case of the operation condition Cda and the case of the optimal operation condition Cdb.

Fig. 25 is a diagram illustrating an example of a flow when the method of deriving the optimal operation condition Cdb illustrated in Fig. 23 is repeatedly executed.

Fig. 26 is a flowchart illustrating an example of an operation assistance method according to one embodiment of the present invention.

Fig. 27 is a flowchart illustrating an example of the operation assistance method according to one embodiment of the present invention.

Fig. 28 is a diagram illustrating an example of an operation assistance system 300 according to one embodiment of the present invention.

Fig. 29 is a diagram illustrating an example of a computer 2200 in which the operation assistance apparatus 100 according to an embodiment of the present invention may be embodied in whole or in part.

DESCRIPTION OF EXEMPLARY EMBODIMENTS

Hereinafter, the present invention will be described through embodiments of the present invention, but the following embodiments do not limit the present invention according to claims. In addition, not all of the combinations of features described in the embodiments are essential to the solving means of the invention.

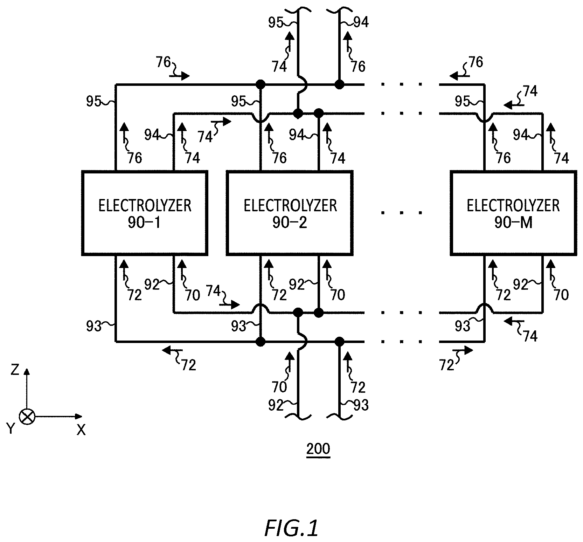

Fig. 1 is a view illustrating an example of an electrolytic apparatus 200 according to one embodiment of the present invention. The electrolytic apparatus 200 of the present example includes a plurality of electrolyzers 90 (electrolyzers 90-1 to 90-M, where M is an integer of 2 or more). The electrolyzer 90 is a tank for electrolyzing an electrolytic solution. The electrolytic apparatus 200 of the present example includes an introduction tube 92, an introduction tube 93, a discharge tube 94, and a discharge tube 95. The introduction tube 92 and the introduction tube 93 are connected to each of the plurality of electrolyzers 90. The discharge tube 94 and the discharge tube 95 are connected to each of the plurality of electrolyzers 90.

Liquid 70 is introduced into each of the plurality of electrolyzers 90. The liquid 70 may be introduced into each of the plurality of electrolyzers 90 after passing through the introduction tube 92. The liquid 70 is an aqueous solution of an alkali metal chloride. The alkali metal is an element belonging to group 1 of the periodic table of the elements. The liquid 70 may be an aqueous NaCl (sodium chloride) solution or an aqueous KCl (potassium chloride) solution. Liquid 72 is introduced into each of the plurality of electrolyzers 90. The liquid 72 may be introduced into each of the plurality of electrolyzers 90 after passing through the introduction tube 93. The liquid 72 is an aqueous solution of an alkali metal hydroxide. When the liquid 70 is an aqueous NaCl (sodium chloride) solution, the liquid 72 is an aqueous NaOH (sodium hydroxide) solution. When the liquid 70 is an aqueous KCl (potassium chloride) solution, the liquid 72 is an aqueous KOH (potassium hydroxide) solution.

Liquid 76 and gas 78 (described later) are discharged from each of the plurality of electrolyzers 90. The liquid 76 and the gas 78 (described later) may be discharged to the outside of the electrolytic apparatus 200 after passing through the discharge tube 95. The liquid 76 is an aqueous solution of an alkali metal hydroxide. When the liquid 70 is an aqueous NaCl (sodium chloride) solution, the liquid 76 is an aqueous NaOH (sodium hydroxide) solution. When the liquid 70 is an aqueous KCl (potassium chloride) solution, the liquid 76 is an aqueous KOH (potassium hydroxide) solution. In the present example, the gas 78 (described later) is $H_2$ (hydrogen).

Liquid 74 and gas 77 (described later) are discharged from each of the plurality of electrolyzers 90. The liquid 74 and the gas 77 (described later) may be discharged to the outside of the electrolytic apparatus 200 after passing through the discharge tube 94. The liquid 74 is an aqueous solution of an alkali metal chloride. When the liquid 70 is an aqueous NaCl (sodium chloride) solution, the liquid 74 is an aqueous NaCl (sodium chloride) solution. When the liquid 70 is an aqueous KCl (potassium chloride) solution, the liquid 74 is an aqueous KCl (potassium chloride) solution. In the present example, the gas 77 (described later) is $Cl_2$ (chlorine).

In the present example, the plurality of electrolyzers 90 are arranged in a predetermined direction. In the present specification, the predetermined arrangement direction of the plurality of electrolyzers 90 is defined as an X-axis direction. In the present specification, a direction orthogonal to the X-axis direction and directed from introduction tube 92 to the discharge tube 94 is defined as a Z axis. In the present specification, a direction orthogonal to the X axis and orthogonal to a Z-axis direction is defined as a Y axis. The Z-axis direction may be parallel to a vertical direction, and an XY plane may be a horizontal plane.

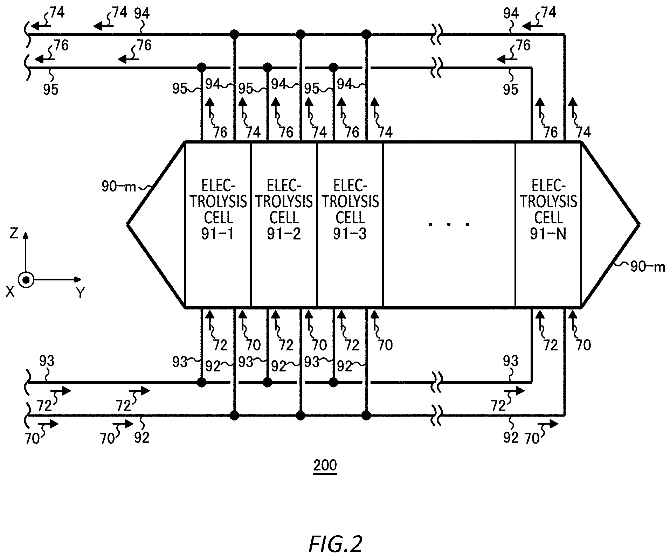

Fig. 2 is a view of the electrolytic apparatus 200 illustrated in Fig. 1 as viewed from the X-axis direction. In Fig. 2, the electrolyzer 90-M will be described as an example. One electrolyzer 90 may include a plurality of electrolysis cells 91 (electrolysis cells 91-1 to 91-N, where N is an integer of 2 or more). N is, for example, 50. In the present example, each of the electrolyzers 90-1 to 90-M includes a plurality of electrolysis cells 91.

The introduction tube 92 and introduction tube 93 are connected to each of the electrolysis cells 91-1 to 91-N. The liquid 70 is introduced into each of the electrolysis cells 91-1 to 91-N. The liquid 70 may be introduced into each of the electrolysis cells 91-1 to 91-N after passing through the introduction tube 92. The liquid 72 is introduced into each of the electrolysis cells 91-1 to 91-N. The liquid 72 may be introduced into each of the electrolysis cells 91-1 to 91-N after passing through the introduction tube 93.

The discharge tube 94 and the discharge tube 95 are connected to each of the electrolysis cells 91-1 to 91-N. The liquid 76 and the gas 78 (described later) are discharged from each of the electrolysis cells 91-1 to 91-N. The liquid 76 and the gas 78 (described later) may be discharged to the outside of the electrolytic apparatus 200 after passing through the discharge tube 95. The liquid 74 and the gas 77 (described later) are discharged from each of the electrolysis cells 91-1 to 91-N. The liquid 74 and the gas 77 (described later) may be discharged to the outside of the electrolytic apparatus 200 after passing through the discharge tube 94.

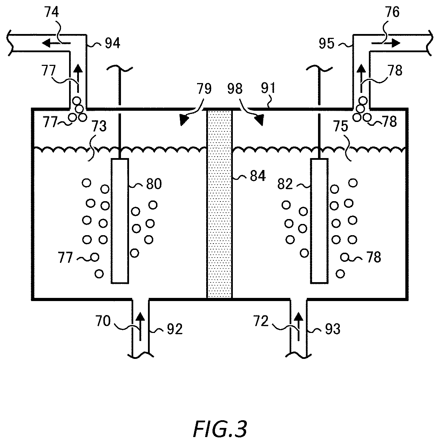

Fig. 3 is a view illustrating an example of details of one electrolysis cell 91 in Fig. 2. The electrolysis cell 91 of the present example includes an anode 80, a cathode 82, and an ion exchange membrane 84. The electrolysis cell 91 has an anode chamber 79 and a cathode chamber 98 partitioned by the ion exchange membrane 84. The anode 80 is arranged in the anode chamber 79. The cathode 82 is arranged in the cathode chamber 98. The introduction tube 92 and the discharge tube 94 are connected to the anode chamber 79. The introduction tube 93 and the discharge tube 95 are connected to the cathode chamber 98.

The ion exchange membrane 84 is a membranous substance that prevents passage of ions having the same sign as the ions arranged in the ion exchange membrane 84 and allows passage of only ions having different signs. In the present example, the ion exchange membrane 84 is a cation exchange membrane that prevents passage of ions (that is, anions) having the same sign as the anions (an anion group 86 to be described later) arranged in the ion exchange membrane 84 and allows passage of only ions (that is, cations) having different signs. When the liquid 70 is an aqueous NaCl (sodium chloride) solution and the liquid 72 is an aqueous solution of an alkali metal hydroxide, the ion exchange membrane 84 is a membrane that allows $Na^+$ (sodium ion) to pass therethrough and prevents $OH^-$ (hydroxide ion) and $Cl^-$ (chloride ion) from passing therethrough.

The anode 80 and the cathode 82 may be maintained at predetermined positive and negative potentials, respectively. The liquid 70 introduced into the anode chamber 79 and the liquid 72 introduced into the cathode chamber 98 are electrolyzed by a potential difference between the anode 80 and the cathode 82. In the anode 80, the following chemical reaction occurs.

$$\text{(Chemical Formula 1)} \qquad 2Cl^- \rightarrow Cl_2 + 2e^-$$

When the liquid 70 is an aqueous NaCl (sodium chloride) solution, NaCl (sodium chloride) is ionized into $Na^+$ (sodium ion) and $Cl^-$ (chloride ion). In the anode 80, chlorine gas ($Cl_2$) is generated by the chemical reaction represented by Chemical Formula 1. $Na^+$ (sodium ions) moves from the anode chamber 79 to the cathode chamber 98 via the ion exchange membrane 84 by an attractive force from the cathode 82.

In the anode chamber 79, liquid 73 may be retained. The liquid 73 is an aqueous solution of an alkali metal chloride. In the present example, the liquid 73 is defined to be an aqueous NaCl (sodium chloride) solution. The $Na^+$ (sodium ion) concentration and the $Cl^-$ (chloride ion) concentration of the liquid 73 may be less than the $Na^+$ (sodium ion) concentration and the $Cl^-$ (chloride ion) concentration of the liquid 70.

In the cathode 82, the following chemical reaction occurs.

$$\text{(Chemical Formula 2)} \qquad 2H_2O + 2e^- \rightarrow H_2 + 2OH^-$$

Liquid 75 may be retained in the cathode chamber 98. The liquid 75 is an aqueous solution of an alkali metal hydroxide. In the present example, the liquid 75 is an aqueous NaOH (sodium hydroxide) solution. In the present example, in the cathode 82, hydrogen gas ($H_2$) and hydroxide ions ($OH^-$) are generated by the chemical reaction represented by Chemical Formula 2. In the present example, the liquid 75 in which hydroxide ions (OH⁻) generated by the chemical reaction represented by Chemical Formula 2 and Na⁺ (sodium ions) moved from the anode chamber 79 are dissolved is retained in the cathode chamber 98.

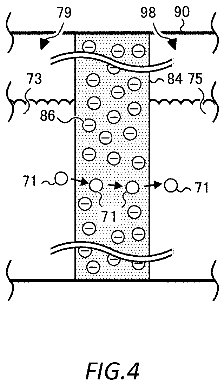

Fig. 4 is an enlarged view of the vicinity of the ion exchange membrane 84 in the electrolysis cell 91 illustrated in Fig. 3. The anion group 86 is fixed to the ion exchange membrane 84 of the present example. Since anions are repelled by the anion group 86, the anions hardly pass through the ion exchange membrane 84. In the present example, the anions are Cl⁻ (chloride ion). Since cations 71 are not repelled by the anion group 86, the cations can pass through the ion exchange membrane 84. In the present example, the cations 71 are Na⁺ (sodium ion).

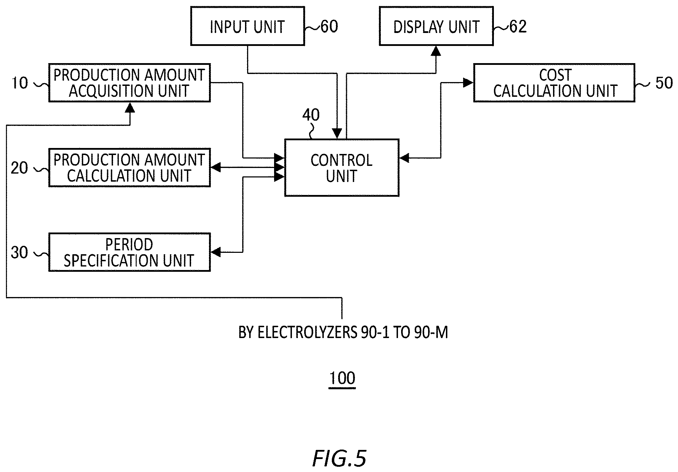

Fig. 5 is a diagram illustrating an example of a block diagram of an operation assistance apparatus 100 according to one embodiment of the present invention. The operation assistance apparatus 100 assists the operation of the electrolytic apparatus 200 (see Fig. 1). The operation assistance apparatus 100 includes a production amount acquisition unit 10, a production amount calculation unit 20, a period specification unit 30, and a control unit 40. The period specification unit 30 will be described later. The operation assistance apparatus 100 may include an input unit 60, a display unit 62, and a cost calculation unit 50. In addition, the control unit 40 may include a display control unit that controls the display unit 62.

The operation assistance apparatus 100 is, for example, a computer including a CPU, a memory, an interface, and the like. The control unit 40 may be the CPU.

The production amount acquisition unit 10 acquires a target production amount of a product produced in a predetermined period by one or more electrolyzers 90 (see Fig. 1). The product is defined as a product P. In the present example, the product P is at least one of NaOH (sodium hydroxide) or Cl₂ (chlorine). The predetermined period may be a period based on the production plan of the product. The predetermined period is defined as a period T. The target production amount of the product P may be a lower limit production amount of the product P in the period T. The production amount and the target production amount of the product P are defined as a production amount Pa and a target production amount Pg, respectively.

The production amount Pa in each electrolyzer 90 can be calculated by following Formula 1.
(Mathematical formula 1)

$$\mathrm{P\,a} = \mathrm{A} \times \mathrm{I\,e} \times \mathrm{CE} \times \mathrm{n} \qquad (1)$$

A is a constant. When the product P is NaCl (sodium chloride), A is, for example, 1.492. When the product P is KCl (potassium chloride), A is, for example, 2.093.

In Formula 1, Ie represents current in one electrolyzer 90, CE represents current efficiency (described later) in one electrolyzer 90, and n represents the number of the electrolysis cells 91 in the electrolyzer 90. In the example of Fig. 1, n = M. The current Ie can be obtained from an integrated production control system (DCS: Distributed Control System) that controls the electrolytic apparatus 200. The current efficiency CE can be calculated from the current Ie, the number n of the electrolysis cells 91 in the electrolyzer 90, the oxygen concentration in the chlorine gas to be generated, the acidity of the aqueous solution (the liquid 70 in Fig. 3) of the alkali metal chloride supplied to the anode chamber 79, the acidity of the aqueous solution (the liquid 74 in Fig. 3) of the alkali metal chloride released from the anode chamber 79, the generation amount of ClO⁻ (hypochlorite ion), and the generation amount of ClO₃⁻ (chlorate ion).

The current efficiency CE can be calculated by subtracting, from 100%, a loss due to an acidity difference between the acidity of the liquid 70 supplied to the anode chamber 79 and the acidity of the liquid 74 released from the anode chamber 79 ($CE_{HCl}$), a loss of the current efficiency CE due to O₂ (oxygen) generation ($CE_{O2}$), a loss of the current efficiency CE due to ClO⁻ (hypochlorite ion) generation ($CE_{ClO}$), and a loss of the current efficiency CE due to ClO₃⁻ (chlorate ion) generation ($CE_{ClO3}$).
(Mathematical formula 2)

$$\mathrm{CE} = 100 - \left( CE_{HCl} + CE_{O2} + CE_{ClO} + CE_{ClO3} \right) \qquad (2-1)$$

$$CE_{HCl} = \left\{ AC \middle/ \left( Ie \times 10^{-3} \times (1/F) \times n \right) \right\} \times 100 \quad (\%) - (2-2)$$

In Formula 2-2, F is a Faraday constant (= 26.8 A·hr/mol).

In Formula 2-2, AC (mol/hr) is an acidity difference between the acidity of the aqueous solution (the liquid 70 in Fig. 3) of the alkali metal chloride supplied to the anode chamber 79 and the acidity of the aqueous solution (the liquid 74 in Fig. 3) of the alkali metal chloride released from the anode chamber 79.

The acidity of the aqueous solution (the liquid 70 in Fig. 3) of the alkali metal chloride supplied to the anode chamber 79 is denoted by Dh1, and the acidity of the aqueous solution (the liquid 74 in Fig. 3) of the alkali metal chloride released from the anode chamber 79 is denoted by Dh2. A flow rate of the aqueous solution (the liquid 70 in Fig. 3) of the alkali metal chloride supplied to the anode chamber 79 is denoted by V (L/hr), and a flow rate of the aqueous solution (the liquid 74 in Fig. 3) of the alkali metal chloride released from the anode chamber 79 is denoted by V'' (L/hr). AC in Formula 2-3 is expressed by following Formula 3.
(Mathematical formula 3)

$$AC = Dh1 \times V - Dh2 \times V'' \qquad (3)$$

When the concentration of $O_2$ (oxygen) contained in chlorine ($Cl2$) (the gas 77 in Fig. 3) is denoted by Do, the loss of the current efficiency CE due to $O_2$ (oxygen) generation ($CE_{O2}$) in Formula 2-1 is expressed by following Formula 4.
(Mathematical formula 4)

$$CE_{O2} = 2 \times Do \qquad (\%) \qquad (4)$$

When the molar concentration of $ClO^-$ (hypochlorite ions) in the aqueous solution (the liquid 70 in Fig. 3) of the alkali metal chloride supplied to the anode chamber 79 is denoted by Dm1, and the molar concentration of $ClO^-$ (hypochlorite ions) in the aqueous solution (the liquid 74 in Fig. 3) of the alkali metal chloride released from the anode chamber 79 is denoted by Dm2, the loss of the current efficiency CE due to $ClO^-$ (hypochlorite ions) generation ($CE_{ClO}$) in Formula 2-1 is expressed by following Formula 5.
(Mathematical formula 5)

$$CE_{ClO} = \frac{2 \times (Dm1 \times V - Dm2 \times V'')}{\left(Ie \times 10^{-3} \times (1/F) \times n\right)} \qquad (5)$$

When the molar concentration of $ClO_3^-$ (chlorate ions) in the aqueous solution (the liquid 70 in Fig. 3) of the alkali metal chloride supplied to the anode chamber 79 is denoted by Dm1', and the molar concentration of $ClO_3^-$ (chlorate ions) in the aqueous solution (the liquid 74 in Fig. 3) of the alkali metal chloride released from the anode chamber 79 is denoted by Dm2', the loss of the current efficiency CE due to $ClO_3^-$ (chlorate ions) generation ($CE_{ClO3}$) in Formula 2-1 is expressed by following Formula 6.
(Mathematical formula 6)

$$CE_{ClO} = \frac{6 \times (Dm1' \times V - Dm2' \times V'')}{\left(Ie \times 10^{-3} \times (1/F) \times n\right)} \qquad (6)$$

The target production amount Pg may be input by the input unit 60. A user of the operation assistance apparatus 100 may input the target production amount Pg through the input unit 60. The input unit 60 is, for example, a keyboard, a mouse, or the like.

The production amount calculation unit 20 calculates a maximum production amount (a post-update maximum production amount (production amount Pm2) to be described later) of the product P when the ion exchange membrane 84 (see Figs. 3 and 4) is updated. The maximum production amount is the maximum production amount of the product P produced by the electrolyzer 90 in the period T. The maximum production amount is defined as a maximum production amount Pm. Note that the production amount calculation unit 20 may calculate the maximum production amount of the product P when a member, which is a member of the electrolyzer 90 (see Figs. 1 and 2), other than the ion exchange membrane 84 is updated.

A case where the ion exchange membrane 84 has been updated is, for example, a case where, when the performance of the ion exchange membrane 84 has deteriorated, the ion exchange membrane 84 having deteriorated performance has been updated to a new ion exchange membrane 84. Updating the ion exchange membrane 84 having deteriorated performance to a new ion exchange membrane 84 may refer to replacing the ion exchange membrane 84 having deteriorated performance with the ion exchange membrane 84 having a new electrolyzer 90.

As described above, the ion exchange membrane 84 repels anions by the anion group 86. The performance of the ion exchange membrane 84 refers to the ability of the ion exchange membrane 84 to repel anions by the anion group 86. A case where the performance of the ion exchange membrane 84 has deteriorated refers to a case where the ability of the ion exchange membrane 84 to repel the anion group 86 has deteriorated due to attachment of the impurity of the cations to the anion group 86 as compared with a case where the impurity of the cations is not attached to the anion group 86. The performance of the ion exchange membrane 84 is likely to deteriorate with the functioning time of the electrolyzer 90 (see Figs. 1 and 2).

The maximum production amount refers to the production amount Pa at which the electrolytic apparatus 200 can theoretically produce the product P. In the present example, the maximum production amount is calculated from maximum current and current efficiency in each of the plurality of electrolyzers 90. The maximum current and the current efficiency may be the maximum value and the current efficiency of the current measured when the electrolytic apparatus 200 is functioning. For example, the maximum current is 16.2 kA. Here, the current efficiency refers to a ratio of an actual production amount to the theoretical production amount Pa of the product P.

The calculated maximum production amount Pm may be displayed on the display unit 62. The display unit 62 is, for example, a display, a monitor, or the like.

The cost calculation unit 50 calculates a cost related to the functioning of one or more electrolyzers 90. The cost is defined as a cost C. The cost C includes an electricity cost for functioning of the electrolytic apparatus 200 (see Figs. 1 and 2), and an unredeemed cost of the ion exchange membrane 84 when the ion exchange membrane 84 is replaced before the performance of the ion exchange membrane 84 completely deteriorates.

The electricity cost for functioning of the electrolytic apparatus 200 can be calculated by multiplying the electricity cost per unit power consumption amount by a power consumption amount in each electrolyzer 90. The power consumption amount can be calculated by a product of a cell voltage CV (described later) of the electrolyzer 90, the current flowing through the electrolyzer 90, and a functioning time. When the electricity cost is an electricity cost per day, the functioning time may be 24 hours. The electricity cost for functioning of the electrolytic apparatus 200 may be the total electricity cost of the plurality of electrolyzers 90.

The cost C may further include at least one of the maintenance cost of the electrolytic apparatus 200, an opportunity loss cost, or a purchase cost of a new ion exchange membrane 84 when the ion exchange membrane 84 is updated. When the ion exchange membrane 84 is updated, a period during which the electrolytic apparatus 200 cannot function may occur. The opportunity loss cost refers to a profit of the product P that would have been obtained if the electrolytic apparatus 200 had been continuously functioned when a period during which the electrolytic apparatus 200 cannot function has occurred.

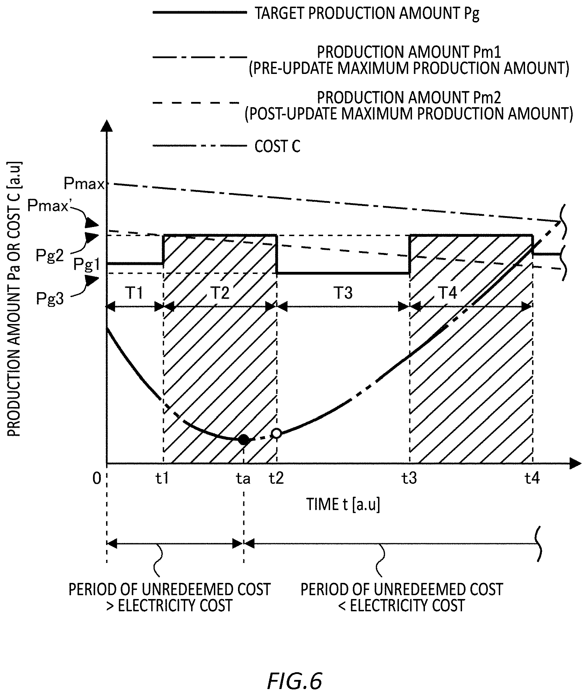

Fig. 6 is a diagram illustrating an example of a relationship between a time period t and the production amount Pa and an example of a relationship between the time period t and the cost C. In Fig. 6, the target production amount is indicated by a thick solid line, the total cost is indicated by a two-dot chain line, a pre-update maximum production amount is indicated by a one-dot chain line, and a post-update maximum production amount is indicated by a rough broken line. The pre-update maximum production amount is the maximum production amount Pm of the product P by the electrolyzer 90 when the ion exchange membrane 84 is not updated. The pre-update maximum production amount is defined as a production amount Pm1. The post-update maximum production amount is the maximum production amount Pm of the product P by the electrolyzer 90 when the ion exchange membrane 84 is updated. The post-update maximum production amount is defined as a production amount Pm2.

When the ion exchange membrane 84 is updated, the functioning of the electrolytic apparatus 200 can be temporarily stopped. Therefore, with the update of the ion exchange membrane 84, a time period during which the electrolyzer 90 cannot function may occur. Therefore, the production amount Pm2 is likely to be smaller than the production amount Pm1. The production amount Pm2 is equal to the production amount Pa obtained by subtracting, from the production amount Pm1, the production amount that could have been produced if the electrolyzer 90 could have functioned. Note that as described above, the performance of the ion exchange membrane 84 is likely to deteriorate with the functioning time of the electrolyzer 90 (see Figs. 1 and 2), and thus the production amount Pm1 and the production amount Pm2 are likely to be reduced with the lapse of the time period t.

A period T from time zero to time t1 is defined as a period T1. A period T from time t1 to time t2 is defined as a period T2. A period T from time t2 to time t3 is defined as a period T3. A period T from time t3 to time t4 is defined as a period T4. In the present example, a plurality of periods T described above include the period T1 to the period T4. The period T1 is, for example, one month, and the period T2 to the period T4 are, for example, two months.

The target production amount Pg in the period T1 is defined as a target production amount Pg1. The target production amount Pg in the period T2 and the period T4 is defined as a target production amount Pg2. The target production amount Pg in the period T3 is defined as a target production amount Pg3. In the present example, the target production amount Pg2 is larger than the target production amount Pg1, and the target production amount Pg3 is smaller than the target production amount Pg1.

The period specification unit 30 (see Fig. 5) specifies the period T during which the maximum production amount Pm (production amount Pm2) of the product P when the ion exchange membrane 84 is updated becomes equal to or more than the target production amount Pg. In the present example, the period specification unit 30 specifies at least one of the period T1 or the period T3. In the present example, the production amount Pm1 is larger than the target production amount Pg in the period T1 to the period T4. However, in the present example, the production amount Pm2 is smaller than the target production amount Pg in the period T2 and the period T4. Therefore, in the present example, when the ion exchange membrane 84 is updated, the electrolytic apparatus 200 (see Figs. 1 and 2) cannot produce the product P of the target production amount Pg in the period T2 and the period T4. In Fig. 6, the period T2 and the period T4 are indicated by hatching. In the present example, when the ion exchange membrane 84 is updated, the electrolytic apparatus 200 (see Figs. 1 and 2) can produce the product P of the target production amount Pg in the period T1 and the period T3.

In the operation assistance apparatus 100, the period specification unit 30 (see Fig. 5) specifies a period during which the production amount Pm2 becomes equal to or more than the target production amount Pg. Therefore, the user of the operation assistance apparatus 100 can know the period T during which the ion exchange membrane 84 can be updated. Note that the period T may be displayed on the display unit 62.

When the operation assistance apparatus 100 is a computer, the computer may be installed with an operation assistance program for causing the computer to function as the operation assistance apparatus 100. The computer may be installed with an operation assistance program for executing a production amount acquisition function of acquiring the target production amount Pg of the product P produced in the predetermined period T by one or more electrolyzers 90, a production amount calculation function of calculating the maximum production amount Pm of the product P when the ion exchange membrane 84 is updated, the maximum production amount being the maximum production amount Pm of the product P produced in the period T by one or more electrolyzers 90, and a period specification function of specifying the period T during which the maximum production amount Pm becomes equal to or more than the target production amount Pg. When the operation assistance apparatus 100 is a computer, the computer may be installed with an operation assistance program for executing an operation assistance method to be described later.

Since the performance of the ion exchange membrane 84 is likely to deteriorate with the lapse of the time period, the electricity cost for functioning of the electrolytic apparatus 200 (see Figs. 1 and 2) is likely to increase with the lapse of the time period. However, when the ion exchange membrane 84 is replaced before the performance of the ion exchange membrane 84 completely deteriorates, the unredeemed cost of the ion exchange membrane 84 is incurred. Before the performance of the ion exchange membrane 84 completely deteriorates, the unredeemed cost is likely to decrease with the lapse of the time period. Therefore, the cost C is likely to become minimum at a certain time with the lapse of the time period. In the present example, the time at which the cost C becomes minimum is defined as time ta. In Fig. 6, the position of the cost C at the time ta is indicated by a black circle.

The period specification unit 30 (see Fig. 5) may specify the timing at which the cost C is minimized in the period T during which the maximum production amount Pm (production amount Pm2) of the product P when the ion exchange membrane 84 is updated is becomes equal to or more than the target production amount Pg. In the present example, the time ta is included in the period T2 in which the production amount Pm2 is less than the target production amount Pg, the period specification unit 30 specifies the timing, at which the cost C is minimized, between the period T1 and the period T3. The time of the timing is defined as the time t2. As a result, the user of the operation assistance apparatus 100 can know the period T during which the ion exchange membrane 84 can be updated and the time t2 of the period T at which the cost C is minimized. In Fig. 6, the position of the cost C at the time t2 is indicated by a white circle.

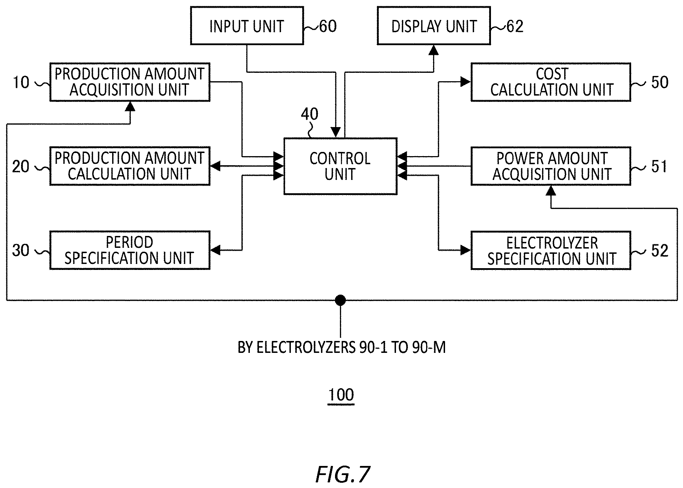

Fig. 7 is a diagram illustrating another example of the block diagram of the operation assistance apparatus 100 according to one embodiment of the present invention. The operation assistance apparatus 100 of the present example is different from the operation assistance apparatus 100 illustrated in Fig. 5 in that a power amount acquisition unit 51 and an electrolyzer specification unit 52 are further included.

The power amount acquisition unit 51 acquires a power amount for each of the plurality of electrolyzers 90 (see Fig. 1) to produce the product P. The power amount is defined as a power amount Pw. The power amount acquisition unit 51 may acquire the power amount Pw for each of the plurality of electrolyzers 90 to produce the same amount of the product P. The power amount Pw for producing the product P may be the power amount Pw (so-called electric power consumption rate) necessary for producing a unit amount of the product P.

The electrolyzer specification unit 52 specifies the electrolyzer 90 having the maximum power amount Pw among the plurality of electrolyzers 90 (see Fig. 1). The power amount Pw is the power amount Pw acquired by the power amount acquisition unit 51. The electrolyzer specification unit 52 may specify one electrolyzer 90, or may specify K (1 < K < M, see Fig. 1) electrolyzers 90.

As the ion exchange membrane 84 deteriorates, the power amount Pw consumed by the electrolyzer 90 having the ion exchange membrane 84 is likely to increase. The electrolyzer 90 having the maximum power amount Pw may refer to the electrolyzer 90, which consumes the most amount of power, among the electrolyzers 90 which consume more amount of power than before the deterioration of the ion exchange membrane 84 due to the deterioration of the ion exchange membrane 84. The electrolyzer specification unit 52 specifies the electrolyzer 90 having the maximum power amount Pw, so that the user of the operation assistance apparatus 100 can know the electrolyzer 90 for which it is preferable to update the ion exchange membrane 84.

The power amount acquisition unit 51 may acquire the total power amount Pw in the plurality of electrolyzers 90 (see Fig. 1). The electrolyzer specification unit 52 may specify one or more electrolyzers 90 having the power amount Pw among the plurality of electrolyzers 90 when the total power amount Pw in the period T is minimum.

The electrolyzer specification unit 52 may specify the electrolyzer 90 having the lowest current efficiency among the plurality of electrolyzers 90 (see Fig. 1). In the present example, the current efficiency refers to a ratio of the actual production amount Pa to the theoretical production amount Pa of the product P. When an aqueous NaCl (sodium chloride) solution is supplied to the anode chamber 79 (see Fig. 3) and an aqueous NaOH (sodium hydroxide) solution is supplied to the cathode chamber 98 (see Fig. 3), the theoretical production amount Pa is calculated on the basis of the maximum current flowing through the electrolyzer 90 and the current efficiency.

When the production amount Pa of the product P produced by the plurality of electrolyzers 90 (see Fig. 1) in the period T is maximized, the power amount Pw consumed by the plurality of electrolyzers 90 in the period T is minimized, the mass of the alkali metal chloride contained in the aqueous solution (the liquid 76 in Fig. 3) of the alkali metal hydroxide discharged from the cathode chamber 98 is minimized, or the mass of $O_2$ (oxygen) contained in the gas 77 (see Fig. 3, $Cl_2$ (chlorine) in the present example) discharged from the anode chamber is minimized, the electrolyzer specification unit 52 may specify the electrolyzer 90 having the lowest current efficiency among the plurality of electrolyzers 90. The operation assistance apparatus 100 may include a plurality of electrolyzer specification units 52.

The production amount acquisition unit 10 may acquire the production amount Pa of the product P produced by each of the plurality of electrolyzers 90 (see Fig. 1) in the period T. The production amount calculation unit 20 may calculate the production amount Pa of the product P produced by each of the plurality of electrolyzers 90 in the period T. In the present example, the period T is at least one of the period T1 to the period T4 (see Fig. 6). The production amount Pa calculated by the production amount calculation unit 20 may refer to the production amount Pa that can be theoretically produced by the electrolytic apparatus 200 in the period T.

The electrolyzer specification unit 52 may specify the electrolyzer 90, of which the ion exchange membrane 84 is to be updated, among the plurality of electrolyzers 90 on the basis of the production amount Pa of the product P acquired by the production amount acquisition unit 10 and the production amount Pa of the product P calculated by the production amount calculation unit 20. The electrolyzer specification unit 52 may specify the electrolyzer 90 to be updated on the basis of a ratio between the acquired production amount Pa and the calculated production amount Pa. When the ion exchange membrane 84 deteriorates, the ratio is less than 1. The electrolyzer 90, of which the ion exchange membrane 84 is to be updated, may refer to the electrolyzer 90 for which it is preferable to update the ion exchange membrane 84 due to the deterioration in the performance of the ion exchange membrane 84.

The electrolyzer specification unit 52 may specify the electrolyzer 90, in which the production amount Pa of the product P acquired by the production amount acquisition unit 10 is minimum, among the plurality of electrolyzers 90 (see Fig. 1). In the electrolyzers 90-1 to 90-M illustrated in Fig. 1, theoretically producible production amounts Pa in the respective electrolyzers 90 in the period T may be the same or different. The electrolyzer specification unit 52 may specify the electrolyzer 90 in which the production amount Pa is minimum regardless of whether the production amount Pa is the same or different.

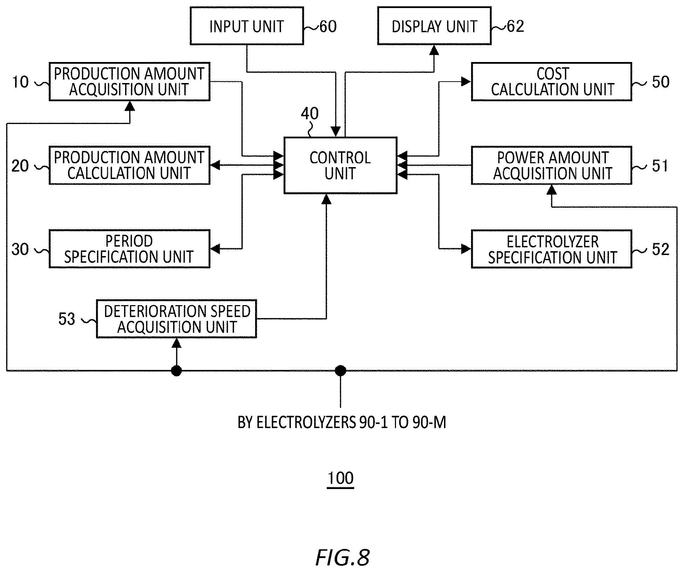

Fig. 8 is a diagram illustrating another example of the block diagram of the operation assistance apparatus 100 according to one embodiment of the present invention. The operation assistance apparatus 100 of the present example is different from the operation assistance apparatus 100 illustrated in Fig. 7 in that a deterioration speed acquisition unit 53 is further included. The deterioration speed acquisition unit 53 acquires the deterioration speed of the ion exchange membrane 84 in each of the plurality of electrolyzers 90 (see Fig. 1). The deterioration speed is defined as a deterioration speed Vd.

As described above, the performance of the ion exchange membrane 84 is likely to deteriorate with the functioning time of the electrolyzer 90 (see Figs. 1 and 2). There is a case where the deterioration speed Vd of the ion exchange membrane 84 is different depending on the ion exchange membrane 84. The case where the deterioration speed Vd of the ion exchange membrane 84 is different includes a case where the deterioration speed Vd is different due to individual differences within a range of a predetermined performance of the ion exchange membrane 84 and a case where the ion exchange membrane 84 is out of the range of the predetermined performance so that the deterioration speed Vd is higher than that of the ion exchange membrane 84 within the range of the predetermined performance. The predetermined performance of the ion exchange membrane 84 may be the performance of the ion exchange membrane 84 in specification. The case where the performance of the ion exchange membrane 84 is out of the range of the predetermined performance includes, for example, a case where the ion exchange membrane 84 is defective, a case where a hole is formed in the ion exchange membrane 84 while the electrolyzer 90 is in functioning, and the like.

When the deterioration speed Vd of the ion exchange membrane 84 is different, the deterioration speed Vd may be further different due to a difference in the type of the ion exchange membrane 84. The type of the ion exchange membrane 84 may be the type of the anion group 86. The types of the plurality of electrolyzers 90 (see Fig. 1) may be the same or different from each other. The type of the electrolyzer 90 may be at least one type of the anode 80 or the cathode 82. When the types of the plurality of electrolyzers 90 are different from each other, the types of the ion exchange membranes 84 optimum for respective electrolyzers 90 may be different.

The electrolyzer specification unit 52 may specify the electrolyzer 90, of which the ion exchange membrane 84 is to be updated, among the plurality of electrolyzers 90 (see Fig. 1) on the basis of the deterioration speed Vd of the ion exchange membrane 84 acquired by the deterioration speed acquisition unit 53. On the basis of the deterioration speed Vd of the ion exchange membrane 84, the electrolyzer specification unit 52 may specify the electrolyzer 90, which has the ion exchange membrane 84 having the highest deterioration speed Vd, among the plurality of ion exchange membranes 84 within the range of the predetermined performance. The ion exchange membrane 84 of the electrolyzer 90 (see Fig. 1) specified by the electrolyzer specification unit 52 may be updated.

When the performance of the ion exchange membrane 84 is within the range of the predetermined performance as described above, a predetermined deterioration speed Vd of the ion exchange membrane 84 is defined as a deterioration speed Vda. When the deterioration speed Vd of one ion exchange membrane 84 among the ion exchange membranes 84 in the plurality of respective electrolyzers 90 (see Fig. 1) is equal to or higher than the deterioration speed Vda, the electrolyzer specification unit 52 may specify the electrolyzer 90 (see Fig. 1) having the one ion exchange membrane 84. The case where the deterioration speed Vd is equal to or higher than the deterioration speed Vda includes, for example, a case where the ion exchange membrane 84 is defective, a case where a hole is formed in the ion exchange membrane 84 while the electrolyzer 90 is functioning, and the like. The one ion exchange membrane 84 may be the ion exchange membrane 84 out of the range of the predetermined performance described above. The one ion exchange membrane 84 in the electrolyzer 90 specified by the electrolyzer specification unit 52 may be updated.

When the ion exchange membrane 84 is updated, the relationship between the time period t and the production amount Pm1, the relationship between the time period t and the production amount Pm2, and the relationship between the time period t and the cost C illustrated in Fig. 6 are updated. The production amount calculation unit 20 may further calculate the maximum production amount Pm of the product P when one ion exchange membrane 84 which is specified by the electrolyzer specification unit 52 and has the deterioration speed Vd equal to or higher than the deterioration speed Vda is updated. When the one ion exchange membrane 84 is updated, the period specification unit 30 may further specify the period T during which the maximum production amount Pm becomes equal to or more than the target production amount Pd, and may further specify the timing at which the cost C is minimized in the period T during which the maximum production amount Pm (production amount Pm2) of the product P becomes equal to or more than the target production amount Pg.

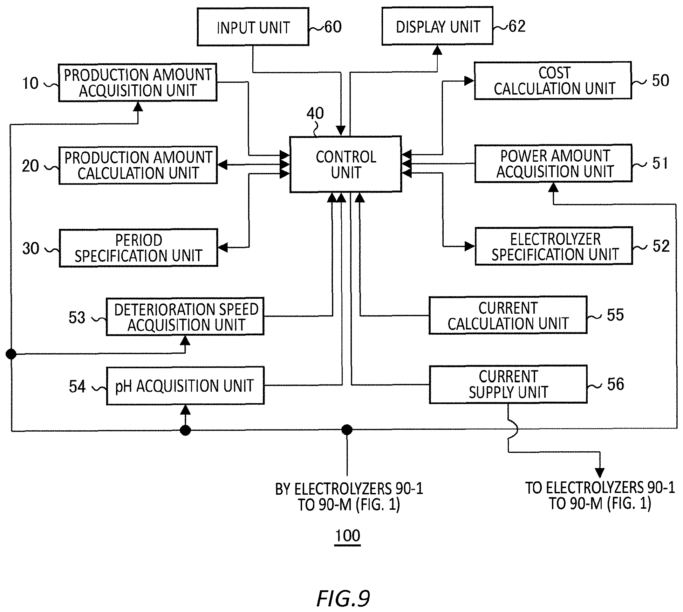

Fig. 9 is a diagram illustrating another example of the block diagram of the operation assistance apparatus 100 according to one embodiment of the present invention. The operation assistance apparatus 100 of the present example is different from the operation assistance apparatus 100 illustrated in Fig. 8 in that a pH acquisition unit 54, a current calculation unit 55, and a current supply unit 56 are further included. The pH acquisition unit 54 acquires a pH of the aqueous NaCl (sodium chloride) solution introduced into the anode chamber 79 (see Fig. 3) and a pH of the aqueous NaCl (sodium chloride) solution discharged from the anode chamber 79, or acquires a pH of the aqueous KCl (potassium chloride) solution introduced into the anode chamber 79 and a pH of the aqueous KCl (potassium chloride) solution discharged from the anode chamber 79. The current calculation unit 55 and the current supply unit 56 will be described later. In the following description, a case where an aqueous NaCl (sodium chloride) solution is introduced into the anode chamber 79, an aqueous NaOH (sodium hydroxide) solution is discharged from the cathode chamber 98, an aqueous KCl (potassium chloride) solution is introduced into the anode chamber 79, and an aqueous KOH (potassium hydroxide) solution is discharged from the cathode chamber 98 will not be described.

The electrolyzer specification unit 52 may specify the electrolyzer 90, of which the ion exchange membrane 84 is to be updated, among the plurality of electrolyzers 90 (see Fig. 1) on the basis of the pH of the aqueous NaCl (sodium chloride) solution acquired by the pH acquisition unit 54. The aqueous NaCl (sodium chloride) solution may be the aqueous NaCl (sodium chloride) solution (the liquid 70 in Fig. 3) introduced into the anode chamber 79. The aqueous NaOH (sodium hydroxide) solution may be the aqueous NaOH (sodium hydroxide) solution (the liquid 76 in Fig. 3) discharged from the cathode chamber 98.

When the ion exchange membrane 84 does not deteriorate, OH⁻ (hydroxide ions) of the cathode chamber 98 hardly passes through the ion exchange membrane 84. However, when the ion exchange membrane 84 deteriorates, OH⁻ (hydroxide ions) of the cathode chamber 98 may pass through the ion exchange membrane 84 and move to the anode chamber 79. Therefore, the electrolyzer specification unit 52 can specify the electrolyzer 90 having the deteriorated ion exchange membrane 84 on the basis of the pH of the aqueous NaCl (sodium chloride) solution.

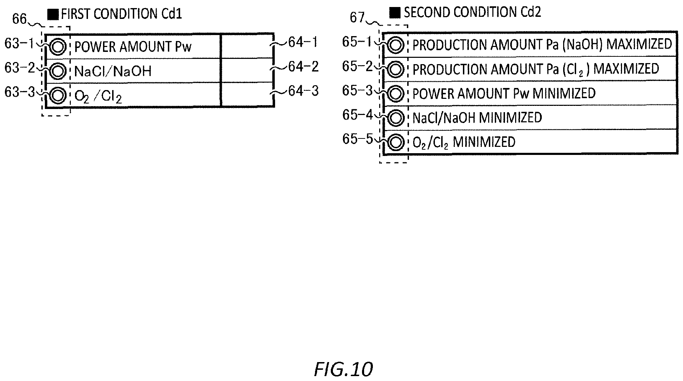

Fig. 10 is a diagram illustrating an example of a display mode on the display unit 62. In the present example, a first selection unit 66, a designation unit 64, and a second selection unit 67 are displayed on the display unit 62. In the present example, the user of the operation assistance apparatus 100 may input a first condition Cd1 for causing the electrolytic apparatus 200 (see Fig. 1) to function in the first selection unit 66 and the designation unit 64 by the input unit 60 (see Fig. 9). In the present example, the user of the operation assistance apparatus 100 inputs a second condition Cd2 for causing the electrolytic apparatus 200 to function in the second selection unit 67 by the input unit 60.

In the present example, the first selection unit 66 includes three options 63 (options 63-1 to 63-3), and the second selection unit 67 includes five options 65 (options 65-1 to 65-5). In the present example, three designation units 64

12

(designation units 64-1 to 64-3) are displayed on the display unit 62.

The second condition Cd2 is a condition (that is, a target condition) that the user of the operation assistance apparatus 100 desires to achieve when the product P is produced by the electrolytic apparatus 200 (see Fig. 1). The current calculation unit 55 (see Fig. 9) calculates the current at which the production amount Pa of the product P produced by the plurality of electrolyzers 90 (see Fig. 1) in the period T is maximized, the power amount Pw consumed in the period T is minimized, the mass of NaCl (sodium chloride), which is introduced into the anode chamber 79 and is contained in the aqueous NaOH (sodium hydroxide) solution discharged from the cathode chamber 98, is minimized, or the mass of $O_2$ (oxygen) contained in $Cl_2$ (chlorine) discharged from the anode chamber 79 is minimized.

NaOH (sodium hydroxide) in the aqueous NaOH (sodium hydroxide) solution discharged from the cathode chamber 98 and $Cl_2$ (chlorine) discharged from the anode chamber 79 are the product P (that is, a target product) of the electrolyzer 90. Therefore, the mass of NaCl (sodium chloride) contained in the NaOH (sodium hydroxide) and the mass of $O_2$ (oxygen) contained in the $Cl_2$ (chlorine) are preferably as small as possible.

When any option 65 of the options 65-1 to 65-5 is selected, with this as momentum, the current calculation unit 55 may calculate the current at which the production amount Pa is maximized, the power amount Pw is minimized, the mass of NaCl (sodium chloride) is minimized, or the mass of $O_2$ (oxygen) is minimized. The current calculation unit 55 (see Fig. 9) may calculate the current at which the NaCl (sodium chloride) concentration of the aqueous NaOH (sodium hydroxide) solution discharged from the cathode chamber 98 is minimized or the $O_2$ (oxygen) concentration of the $Cl_2$ (chlorine) discharged from the anode chamber 79 is minimized.

The first condition Cd1 is a condition guaranteed while satisfying the second condition Cd2 in the case of producing the product P by the electrolytic apparatus 200 (see Fig. 1). The first condition Cd1 may be a condition (that is, a constraint condition) that the user of the operation assistance apparatus 100 desires to guarantee while satisfying the second condition Cd2.

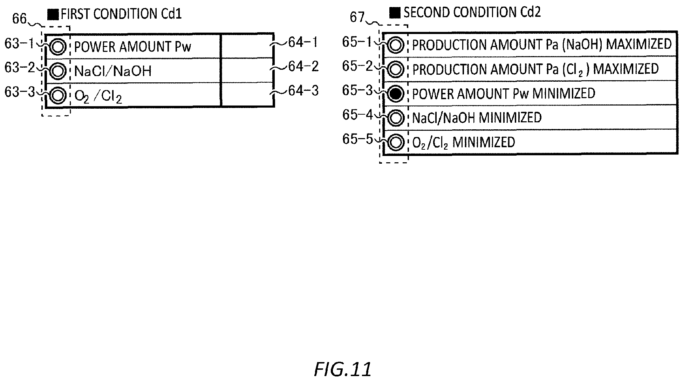

Fig. 11 is a diagram illustrating an example of the display mode of the display unit 62 when the second condition Cd2 is selected. In the present example, it is assumed that the first condition Cd1 is not selected, but a predetermined production amount Pa1 is designated as the production amount Pa of NaOH (sodium hydroxide). In the present example, the option 65-3 is selected as the second condition Cd2.

The current calculation unit 55 may calculate the current at which the power amount Pw is minimized when the production amount Pa of the product P is equal to or more than a predetermined production amount. In the present example, the current calculation unit 55 calculates the current at which the power amount Pw is minimized when the production amount Pa of NaOH (sodium hydroxide) is equal to or more than the production amount Pa1. The production amount Pa1 is, for example, 400 tons/day.

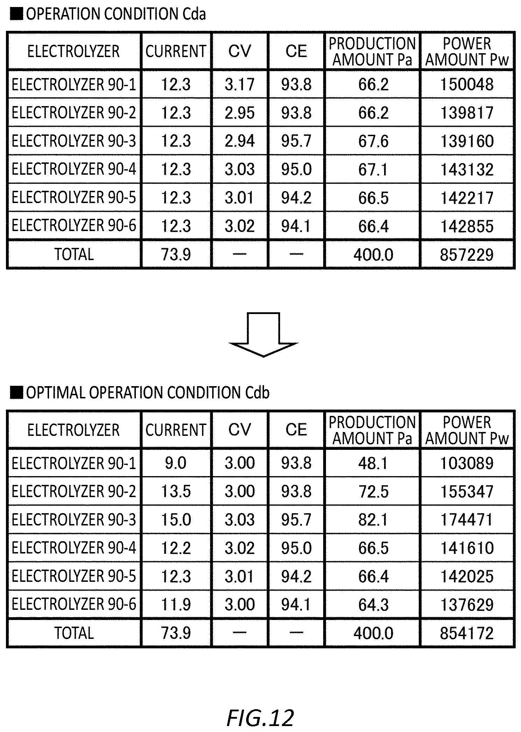

Fig. 12 is a diagram illustrating an example of an operation condition Cda and an optimal operation condition Cdb. The optimal operation condition Cdb is a condition optimized such that the current supplied to each of the plurality of electrolyzers 90 satisfies the second condition Cd2 while the electrolytic apparatus 200 satisfies the first condition Cd1. The operation condition Cda may be an operation condition before the optimal operation condition Cdb is applied. In the present example, it is assumed that the electrolytic apparatus 200 includes six electrolyzers 90 (electrolyzers 90-1 to 90-6). In the present example, the operation condition Cda and the optimal operation condition Cdb may be displayed on the display unit 62.

The cell voltage CV and the current efficiency CE of each of the plurality of electrolyzers 90, and the production amount Pa and the power amount Pw in each of the plurality of electrolyzers 90 when each current is supplied to each of the plurality of electrolyzers 90 may be displayed together on the display unit 62. Note that as described above, in the present example, the current efficiency CE refers to the ratio of the actual production amount Pa to the theoretical production amount Pa of the product P.

The total power amount consumed by the plurality of electrolyzers 90 (see Fig. 1) is defined as a total power amount Pws. The current calculation unit 55 may calculate the current, at which the total power amount Pws is minimized, flowing to each of the electrolyzers 90. As described above, the performances of the ion exchange membranes 84 included in the plurality of respective electrolyzers 90 may be different from each other. Therefore, when the magnitudes of the currents supplied to the plurality of electrolyzers 90 are different from each other, the total power amount Pws may be smaller than when the magnitudes of the currents are the same.

The current calculation unit 55 may calculate the magnitude of the current distributed to each of the plurality of electrolyzers 90 so as to minimize the total power amount Pws while maintaining the magnitude of the total current supplied to the plurality of electrolyzers 90. The operation condition Cda illustrated in Fig. 12 is an example of a case where the total current (in the present example, the magnitude of 73.9 kA) is equally distributed to six electrolyzers 90, and the operation condition Cdb is an example of a case where the total current (in the present example, the magnitude of 73.9 kA) is distributed so as to minimize the total power amount Pws. In the present example, the number N of the electrolysis cells 91 (see Fig. 2) in one electrolyzer 90 is 160.

The current supply unit 56 (see Fig. 9) supplies the current calculated by the current calculation unit 55 to each of the plurality of electrolyzers 90. The current supply unit 56 may supply, to each of the plurality of electrolyzers 90, the current of the magnitude, which is calculated by the current calculation unit 55, distributed to each of the plurality of electrolyzers 90. As a result, the operation assistance apparatus 100 can assist the operation of the electrolytic apparatus 200 so as to minimize the power amount Pw while guaranteeing that the production amount Pa of NaOH (sodium hydroxide) is equal to or more than the production amount Pa1.

When the predetermined production amount Pa1 is designated as the production amount Pa of NaOH (sodium hydroxide) and the option 65-1 (that is, the production amount of NaOH (sodium hydroxide)) is selected as the second condition Cd2, the current calculation unit 55 may calculate the current at which the production amount Pa of the product P is equal to or more than the predetermined production amount and the production amount Pa is maximized.

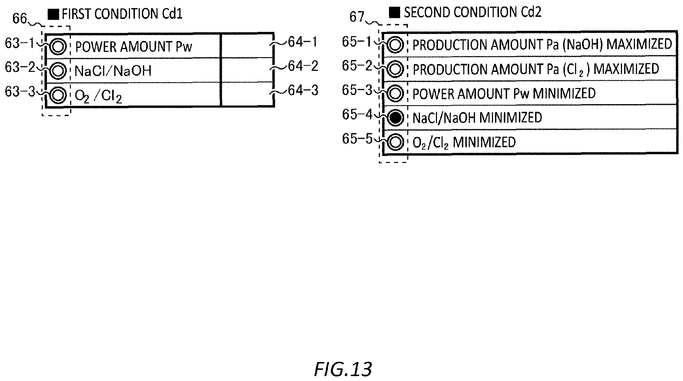

Fig. 13 is a diagram illustrating another example of the display mode of the display unit 62 when the second condition Cd2 is selected. In the present example, the option 65-4 is selected as the second condition Cd2. The present example is different from the example illustrated in Fig. 11 in this respect. Also in the present example, it is assumed that the predetermined production amount Pa1 is designated as the production amount Pa of NaOH (sodium hydroxide). The option 65-5 may be selected as the second condition Cd2.

The current calculation unit 55 may calculate the current at which the mass of NaCl (sodium chloride) contained in the aqueous NaOH (sodium hydroxide) solution discharged from the cathode chamber 98 is minimized or the mass of $O_2$ (oxygen) contained in the $Cl_2$ (chlorine) discharged from the anode chamber 79 is minimized when the production amount Pa of the product P is equal to or more than the predetermined production amount Pa1. The current calculation unit 55 may calculate the magnitude of the current distributed to each of the plurality of electrolyzers 90 so as to minimize the mass of NaCl (sodium chloride) or minimize the mass of $O_2$ (oxygen) while maintaining the magnitude of the total current supplied to the plurality of electrolyzers 90.

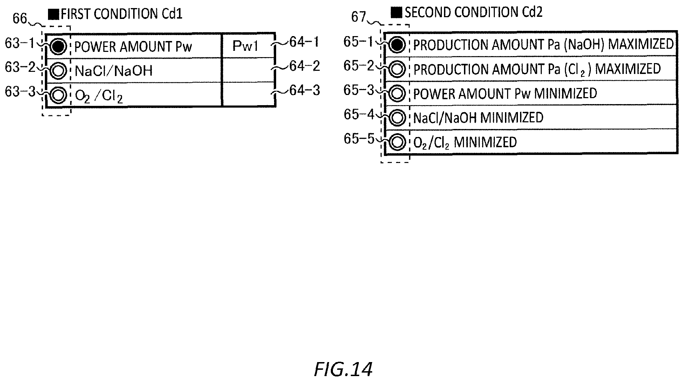

Fig. 14 is a diagram illustrating another example of the display mode of the display unit 62 when the first condition Cd1 and the second condition Cd2 are selected. In the present example, the option 63-1 is selected as the first condition Cd1, and a predetermined power amount Pw1 is input to the designation unit 64-1. In the present example, the option 65-1 is selected as the second condition Cd2. The option 65-2 may be selected as the second condition Cd2.

The current calculation unit 55 may calculate the current at which the production amount Pa of the product P is maximized when the power amount Pw consumed in the period T by the plurality of electrolyzers 90 is less than a predetermined power amount. In the present example, the current calculation unit 55 calculates the current at which the production amount Pa is maximized when the power amount Pw consumed in the period T is less than the power amount Pw1. The power amount Pw1 is, for example, 800,000 kWh/day.

The total production amount in the period T by the plurality of electrolyzers 90 (see Fig. 1) is defined as a total production amount Pas. The current calculation unit 55 may calculate the current, at which the total production amount Pas is maximized, flowing to each of the electrolyzers 90. Similarly to the case of Fig. 12, the current calculation unit 55 may calculate the magnitude of the current distributed to each of the plurality of electrolyzers 90 so as to maximize the total production amount Pas while maintaining the magnitude of the total current supplied to the plurality of electrolyzers 90.

The current supply unit 56 may supply, to each of the plurality of electrolyzers 90, the current of the magnitude, which is calculated by the current calculation unit 55, distributed to each of the plurality of electrolyzers 90. As a result, the operation assistance apparatus 100 can assist the operation of the electrolytic apparatus 200 so as to maximize the production amount Pa while guaranteeing that the power amount Pw consumed in the period T by the plurality of electrolyzers 90 is less than the power amount Pw1.

When the option 63-1 (that is, the power amount Pw) is selected as the first condition Cd1 and the option 65-3 (that is, the power amount Pw) is selected as the second condition Cd2, the current calculation unit 55 may calculate the current at which the power amount Pw consumed in the period T by the plurality of electrolyzers 90 is less than the predetermined power amount Pw1 and the power amount Pw is minimized.

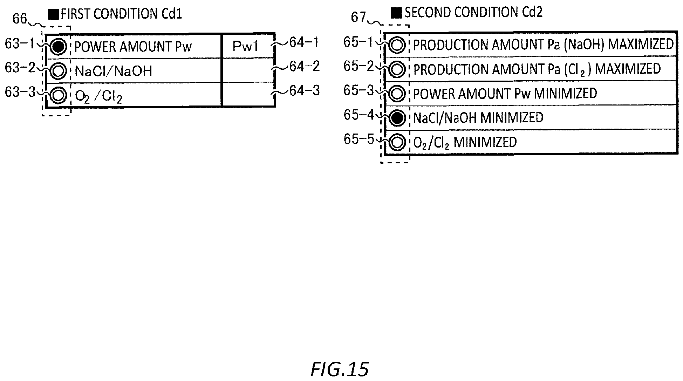

Fig. 15 is a diagram illustrating another example of the display mode of the display unit 62 when the first condition Cd1 and the second condition Cd2 are selected. In the present example, the option 65-4 is selected as the second condition Cd2. the present example is different from the example illustrated in Fig. 14 in this respect. The option 65-5 may be selected as the second condition Cd2.

The current calculation unit 55 may calculate the current at which the mass of NaCl (sodium chloride) contained in the aqueous NaOH (sodium hydroxide) solution discharged from the cathode chamber 98 is minimized or the mass of $O_2$ (oxygen) contained in the $Cl_2$ (chlorine) discharged from the anode chamber 79 is minimized when the power amount Pw consumed in the period T by the plurality of electrolyzers 90 is less than the predetermined power amount Pw1. Similarly to the case of Fig. 12, the current calculation unit 55 may calculate the magnitude of the current distributed to each of the plurality of electrolyzers 90 so as to minimize the mass of NaCl (sodium chloride) or minimize the mass of $O_2$ (oxygen) while maintaining the magnitude of the total power amount supplied to the plurality of electrolyzers 90.

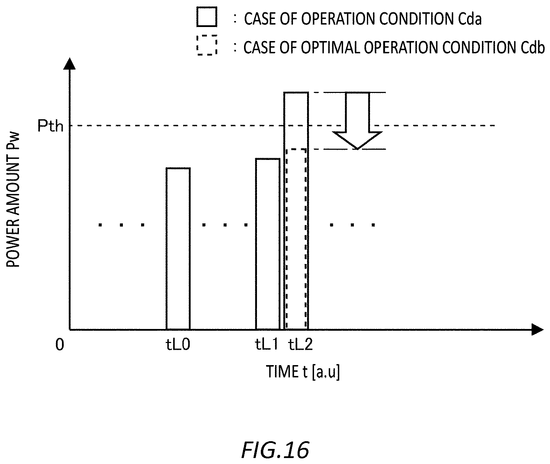

Fig. 16 is a diagram illustrating an example of a relationship between the time period t and the power amount Pw in the case of the operation condition Cda and the optimal operation condition Cdb. Fig. 16 is an example of the relationship between the time period t and the power amount Pw when the production of the product P is started at time t0. Each of time tL0 to time tL2 may be one time or a certain period (for example, one week or the like).

The threshold of the power amount Pw is defined as threshold power Pth. The threshold power Pth is, for example, a maximum value of power required from an electric power company. As described above, the performance of the ion exchange membrane 84 (see Fig. 3) is likely to deteriorate with the functioning time of the electrolyzer 90 (see Figs. 1 and 2). Therefore, the power amount Pw is likely to increase with the lapse of the time period t. In the present example, it is assumed that the power amount Pw is less than the threshold power Pth until the time tL1, but the power amount Pw becomes equal to or more than the threshold power Pth at the time tL2.

When the first condition Cd1 in at least one of the cases of Figs. 14 and 15 is selected, the current calculation unit 55 may calculate the magnitude of the current distributed to each of the plurality of electrolyzers 90 such that the power amount Pw is less than the threshold power Pth while maintaining the magnitude of the total power amount supplied to the plurality of electrolyzers 90. As a result, the user of the operation assistance apparatus 100 can select to continue the functioning of the electrolytic apparatus 200 without replacing the ion exchange membrane 84 at the time tL2.

In the example illustrated in Fig. 14, the current calculation unit 55 may calculate the magnitude of the current distributed to each of the plurality of electrolyzers 90 such that the power amount Pw is less than the threshold power Pth, and then may further calculate the current at which the production amount Pa of the product P is maximized. As a result, the operation assistance apparatus 100 can assist the operation of the electrolytic apparatus 200 so as to maximize the production amount Pa while guaranteeing that the power amount Pw consumed in the period T by the plurality of electrolyzers 90 is less than the threshold power Pth.

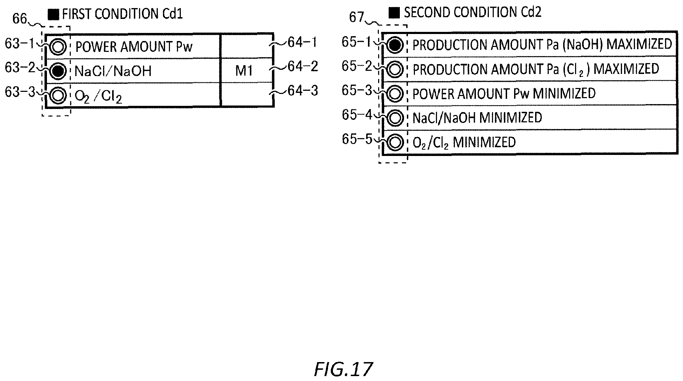

Fig. 17 is a diagram illustrating another example of the display mode of the display unit 62 when the first condition Cd1 and the second condition Cd2 are selected. In the present example, the option 63-2 is selected as the first condition Cd1, and predetermined mass M1 is input to the designation unit 64-2. The option 63-3 may be selected as the first condition Cd1, and the predetermined mass M1 may be input to the designation unit 64-3. In the present example, the option 65-1 is selected as the second condition Cd2. The option 65-2 may be selected as the second condition Cd2.

The current calculation unit 55 may calculate the current at which the production amount Pa of the product P is maximized when the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79 is less than predetermined mass. In the present example, the current calculation unit 55 calculates the current at which the production amount Pa is maximized when the mass of NaCl (sodium chloride) is less than the mass M1. The mass M1 is, for example, 40 g/L.

The current calculation unit 55 may calculate the current flowing to each electrolyzer 90 at which the total production amount Pas of the product P is maximized when the mass of NaCl (sodium chloride) discharged from all the cathode chambers 98 of the plurality of electrolyzers 90 is less than the mass M1. Similarly to the case of Fig. 12, the current calculation unit 55 may calculate the magnitude of the current distributed to each of the plurality of electrolyzers 90 so as to maximize the total production amount Pas while maintaining the magnitude of the total current supplied to the plurality of electrolyzers 90.

The current supply unit 56 may supply, to each of the plurality of electrolyzers 90, the current of the magnitude, which is calculated by the current calculation unit 55, distributed to each of the plurality of electrolyzers 90. As a result, the operation assistance apparatus 100 can assist the operation of the electrolytic apparatus 200 so as to maximize the production amount Pa while guaranteeing that the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79 is less than the predetermined mass M1.

When the option 63-2 (that is, the mass of NaCl (sodium chloride)) is selected as the first condition Cd1 and the option 65-4 (that is, the mass of NaCl (sodium chloride)) is selected as the second condition Cd2, the current calculation unit 55 may calculate the current at which the mass of NaCl (sodium chloride) contained in the aqueous NaOH (sodium hydroxide) solution discharged from the cathode chamber 98 is less than the predetermined mass M1 and the mass of the NaCl (sodium chloride) is minimized.

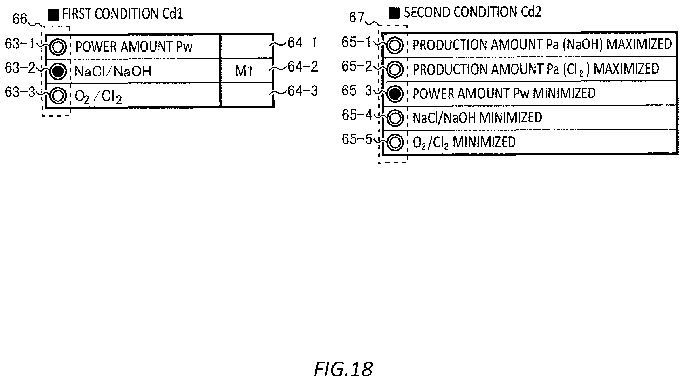

Fig. 18 is a diagram illustrating another example of the display mode of the display unit 62 when the first condition Cd1 and the second condition Cd2 are selected. In the present example, the option 65-3 is selected as the second condition Cd2. the present example is different from the example illustrated in Fig. 17 in this respect.

The current calculation unit 55 may calculate the current at which the power amount Pw (total power amount Pws) consumed in the period T by the plurality of electrolyzers 90 is minimized when the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79 is less than predetermined mass. Similarly to the case of Fig. 12, the current calculation unit 55 may calculate the magnitude of the current distributed to each of the plurality of electrolyzers 90 so as to minimize the total power amount Pws while maintaining the magnitude of the total current supplied to the plurality of electrolyzers 90.

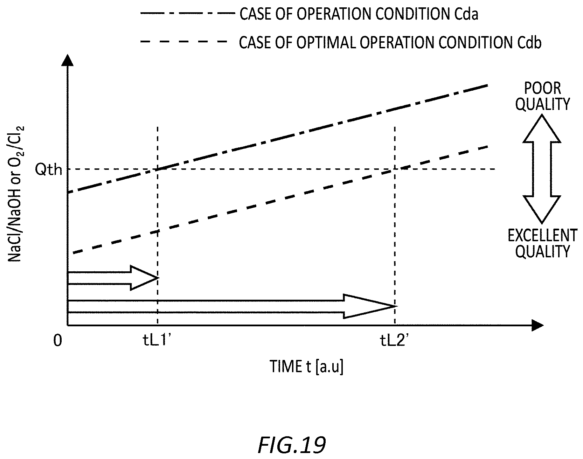

Fig. 19 is a diagram illustrating an example of the relationship between the time period t and the quality of the product P in the case of the operation condition Cda and the optimal operation condition Cdb. In the present example, the quality of the product P is the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79. Fig. 19 is an example of the relationship between the time period t and the quality of the product P when the production of the product P is started at the time t0.

As described above, the performance of the ion exchange membrane 84 (see Fig. 3) is likely to deteriorate with the functioning time of the electrolyzer 90 (see Figs. 1 and 2). Therefore, the quality of the product P is likely to deteriorate with the lapse of the time period t. The threshold of the quality of the product P is defined as a threshold Qth. In the present example, the threshold Qth is the maximum value of the mass of NaCl (sodium chloride) contained in the aqueous NaOH (sodium hydroxide) solution discharged from the cathode chamber 98 or the maximum value of the mass of $O_2$ (oxygen) contained in the $Cl_2$ (chlorine) discharged from the anode chamber 79. In Fig. 19, it is assumed that the quality is worse as the quality of the product P is larger than the threshold Qth, and the quality is better as the quality is smaller than the threshold Qth.

In the case of the operation condition Cda, the time at which the quality of the product P reaches the threshold Qth is defined as time tL1'. The time period from the time t0 to the time tL1' is defined as a time period TL1. In the case of the optimal operation condition Cdb, the time at which the quality of the product P reaches the threshold Qth is defined as time tL2'. The time period from the time t0 to the time tL2' is defined as a time period TL2.

When the first condition Cd1 in the case of at least one of Figs. 17 or 18 is selected, the current calculation unit 55 may calculate the magnitude of the current distributed to each of the plurality of electrolyzers 90 such that the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79 is less than the threshold Qth while maintaining the magnitude of the total current supplied to the plurality of electrolyzers 90. As a result, the user of the operation assistance apparatus 100 can continue the functioning of the electrolytic apparatus 200 until the time tL2' without replacing the ion exchange membrane 84 at the time tL1'.

In the example illustrated in Fig. 17, the current calculation unit 55 may calculate the magnitude of the current distributed to each of the plurality of electrolyzers 90 such that the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79 is less than the threshold Qth, and then may further calculate the current at which the production amount Pa of the product P is maximized. As a result, the operation assistance apparatus 100 can assist the operation of the electrolytic apparatus 200 so as to maximize the production amount Pa while guaranteeing that the mass of NaCl (sodium chloride) contained in the aqueous NaOH (sodium hydroxide) solution discharged from the cathode chamber 98 or the mass of $O_2$ (oxygen) contained in the $Cl_2$ (chlorine) discharged from the anode chamber 79 is less than the threshold Qth.

Figs. 11, 13 to 15, 17, and 18 are examples in which one first condition C1 is selected and one second condition C2 is selected. A plurality of first conditions C1 may be selected, and a plurality of second conditions C2 may be selected.

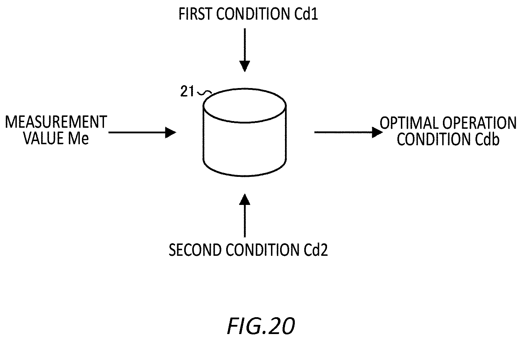

Fig. 20 is a schematic diagram illustrating an example of a method of deriving the optimal operation condition Cdb. When the first condition Cd1 (see Fig. 11 or the like), the second condition Cd2 (see Fig. 11 or the like), and a measurement value Me are input, an operation condition inference model 21 outputs the optimal operation condition Cdb for the first condition Cd1, the second condition Cd2, and the measurement value Me. Here, the measurement value Me may include at least one of the measurement value of the current supplied to each of the plurality of electrolyzers 90 (see Fig. 1), the measurement value of the voltage supplied to each of the plurality of electrolyzers 90, the temperature of each of the plurality of electrolyzers 90, the concentration or mass of NaCl (sodium chloride) in the cathode chamber 98 of each of the plurality of electrolyzers 90, the concentration or mass of $O_2$ (oxygen) in the anode chamber 79 of each of the plurality of electrolyzers 90, the pH of the aqueous NaOH (sodium hydroxide) solution in the cathode chamber 98 of each of the plurality of electrolyzers 90, or the pH of the aqueous NaCl (sodium chloride) solution in the anode chamber 79 of each of the plurality of electrolyzers 90.

The operation condition inference model 21 may be generated by performing machine learning on the first condition Cd1 (see Fig. 11 or the like), the second condition Cd2 (see Fig. 11 or the like), the measurement value Me, and the optimal operation condition Cdb. The operation condition inference model 21 may be a regression formula.

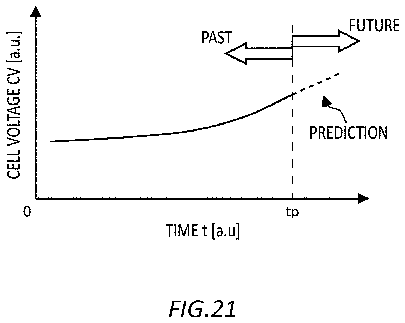

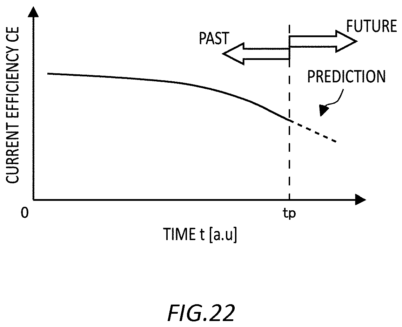

Fig. 21 is a diagram illustrating an example of the relationship between the time period t and the cell voltage CV. Fig. 22 is a diagram illustrating an example of the relationship between the time period t and the current efficiency CE. In Figs. 21 and 22, the current time is defined as time tp. As described above, the performance of the ion exchange membrane 84 (see Fig. 3) is likely to deteriorate with the functioning time of the electrolyzer 90 (see Figs. 1 and 2). Therefore, from the past to the current time tp, the cell voltage CV is likely to increase, and the current efficiency CE is likely to decrease.

The relationship between the time period t after the time tp and the cell voltage CV and the relationship between the time period t and the current efficiency CE may be calculated on the basis of the operation condition inference model 21. In Figs. 21 and 22, the calculated relationship between the time period t and the cell voltage CV and the calculated relationship between the time period t and the current efficiency CE are indicated by broken lines.

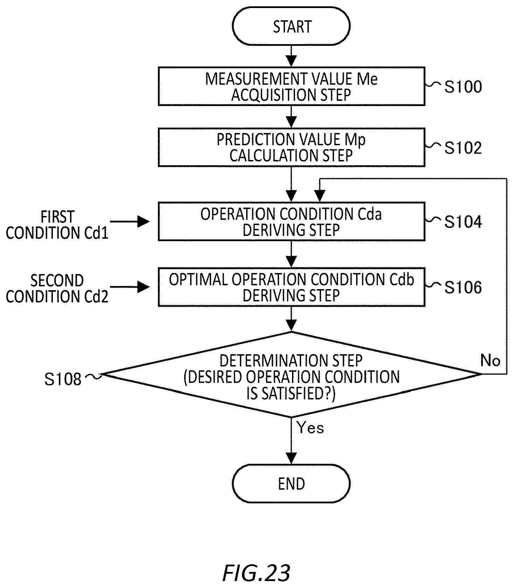

Fig. 23 is a flowchart illustrating an example of a method of deriving the optimal operation condition Cdb. Step S100 is a measurement value Me acquisition step. In step S100, the operation assistance apparatus 100 may acquire the measurement value Me. As described above, the measurement value Me may include at least one of the measurement value of the current supplied to each of the plurality of electrolyzers 90 (see Fig. 1), the measurement value of the voltage supplied to each of the plurality of electrolyzers 90, the temperature of each of the plurality of electrolyzers 90, the concentration or mass of NaCl (sodium chloride) in the cathode chamber 98 of each of the plurality of electrolyzers 90, the concentration or mass of $O_2$ (oxygen) in the anode chamber 79 of each of the plurality of electrolyzers 90, the pH of the aqueous NaOH (sodium hydroxide) solution in the cathode chamber 98 of each of the plurality of electrolyzers 90, or the pH of the aqueous NaCl (sodium chloride) solution in the anode chamber 79 of each of the plurality of electrolyzers 90.

Step S102 is a prediction value calculation step. In step S102, the operation assistance apparatus 100 may calculate a prediction value Mp on the basis of the operation condition inference model 21. The prediction value Mp is, for example, a value included in the broken line portions in Figs. 21 and 22.

Step S104 is an operation condition Cda deriving step. In step S104, the operation assistance apparatus 100 may derive the operation condition satisfying the first condition Cd1 on the basis of the operation condition inference model 21.

Step S106 is an optimal operation condition Cdb deriving step. In step S106, the operation assistance apparatus 100 may derive the operation condition further satisfying the second condition Cd2 on the basis of the operation condition inference model 21.

Step S108 is a determination step. In step S108, the operation assistance apparatus 100 determines whether the optimal operation condition Cdb derived in step S106 satisfies a desired operation condition (for example, the first condition Cd1 and the second condition Cd2). When it is determined that the desired operation condition is satisfied, the operation assistance apparatus 100 ends deriving the optimal operation condition Cdb. When it is determined that the desired operation condition is not satisfied, the operation assistance apparatus 100 returns to step S104 to derive the operation condition Cda again.

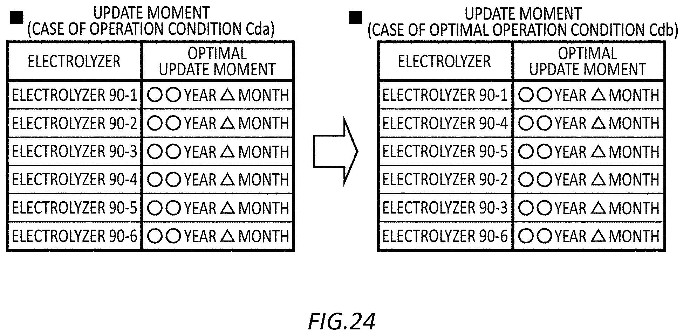

Fig. 24 is a diagram illustrating an example of an update moment of the ion exchange membrane 84 (see Fig. 3) in the case of the operation condition Cda and the case of the optimal operation condition Cdb. The case of the operation condition Cda may be an operation condition before the optimal operation condition Cdb is derived by the operation condition inference model 21. In the case of the operation condition Cda, the optimal update moment of the ion exchange membrane 84 is set to be the electrolyzers 90-1 to 90-6 in the ascending order. In the case of the optimal operation condition Cdb, the magnitude of the current distributed to each of the plurality of electrolyzers 90 can change as compared with the case of the operation condition Cda. Therefore, in the case of the optimal operation condition Cdb, the optimal update moment of the ion exchange membrane 84 can change as compared with the case of the operation condition Cda. In the present example, the order of updating the electrolyzers 90-2 to 90-5 changes as compared with the case of the operation condition Cda.

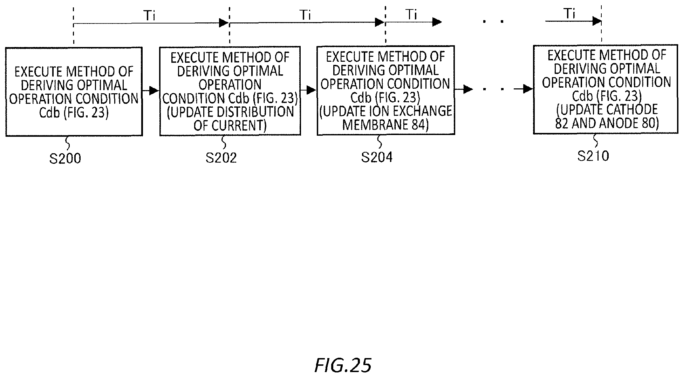

Fig. 25 is a diagram illustrating an example of a flow when the method of deriving the optimal operation condition Cdb illustrated in Fig. 23 is repeatedly executed. A method of deriving the optimal operation condition Cdb may be repeatedly executed at intervals of a time period Ti. The time period Ti is, for example, one month. In the present example, in steps S200 to S204, first to third methods of deriving the optimal operation condition Cdb are executed, respectively.

In the optimal operation condition Cdb derived in step S202, the current distributed to each of the plurality of electrolyzers 90 (see Fig. 1) may be different compared with the case of the optimal operation condition Cdb in step S200. In the present example, step S204 is set to be performed at the timing (timing at which the ion exchange membrane 84 can be updated and the cost C is minimized) of the time t2 illustrated in Fig. 6. In step S204, the optimal operation condition Cdb may be derived after the ion exchange membrane 84 is updated. In step S210, it is assumed that the optimal operation condition Cdb does not satisfy the desired operation condition even if the optimal operation condition Cdb is derived. In step S210, the optimal operation condition Cdb may be derived after the cathode 82 and the anode 80 are updated.

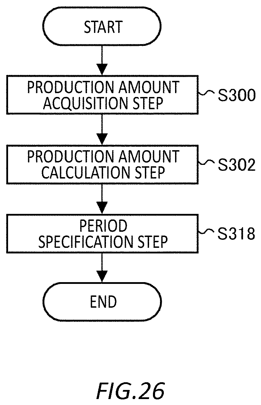

Fig. 26 is a flowchart illustrating an example of the operation assistance method according to one embodiment of the present invention. The operation assistance method according to one embodiment of the present invention is an operation assistance method of assisting the operation of the electrolytic apparatus 200 (see Fig. 1).

A production amount acquisition step S300 is a step in which the production amount acquisition unit 10 (see Fig. 5) acquires the target production amount Pg (see Fig. 6) of the product P produced in the predetermined period T by one or more electrolyzers 90 (see Fig. 1). A production amount calculation step S302 is a step in which the production amount calculation unit 20 calculates the maximum production amount Pm (the production amount Pm2 in Fig. 6) of the product P produced in the predetermined period T by one or more electrolyzers 90. The maximum production amount Pm is the maximum production amount of the product P when the ion exchange membrane 84 (see Fig. 3) is updated.

Note that the production amount calculation step S302 may be performed after the production amount acquisition step S300 or may be performed before the production amount acquisition step S300. The production amount calculation step S302 may be performed simultaneously with the production amount acquisition step S300.

A period specification step S318 is a step in which the period specification unit 30 (see Fig. 5) specifies a period during which the maximum production amount Pm becomes equal to or more than the target production amount Pg. In the operation assistance method, in the period specification step S318, the period specification unit 30 specifies a period during which the maximum production amount Pm becomes equal to or more than the target production amount Pg.

Therefore, the user of the operation assistance method can know the period T during which the ion exchange membrane 84 can be updated.

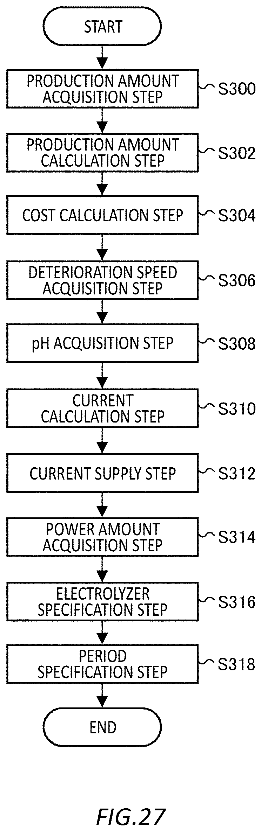

Fig. 27 is a flowchart illustrating an example of the operation assistance method according to one embodiment of the present invention. The operation assistance method of the present example is different from the operation assistance method illustrated in Fig. 26 in that steps S304 to S316 are further included.

A cost calculation step S304 is a step in which the cost calculation unit 50 (see Fig. 5) calculates the cost related to the functioning of one or more electrolyzers 90 (see Fig. 1). A deterioration speed acquisition step S306 is a step in which the deterioration speed acquisition unit 53 (see Fig. 9) acquires the deterioration speed of the ion exchange membrane 84 (see Fig. 3) in each of the plurality of electrolyzers 90. A pH acquisition step S308 is a step in which the pH acquisition unit 54 (see Fig. 9) acquires the pH of the aqueous solution of the alkali metal chloride introduced into the anode chamber 79 and the pH of the aqueous solution of the alkali metal chloride discharged from the anode chamber 79.

The current calculation step S310 is a step in which the current calculation unit 55 (see Fig. 9) calculates the current at which the total production amount $Pas$ of the product P produced in the period T by the plurality of electrolyzers 90 (see Fig. 1) is maximized, the total power amount $Pws$ consumed in the period T by the plurality of electrolyzers 90 is minimized, the mass of the alkali metal chloride, which is introduced into the anode chamber 79 and is contained in the aqueous solution of the alkali metal hydroxide discharged from the cathode chamber 98, is minimized, or the mass of $O_2$ (oxygen) contained in the $Cl_2$ (chlorine) discharged from the anode chamber 79 is minimized. A current supply step S312 is a step in which the current supply unit 56 (see Fig. 9) supplies the current calculated in the current calculation step S310 to each of the plurality of electrolyzers 90 (see Fig. 1).

A power amount acquisition step S314 is a step in which the power amount acquisition unit 51 (see Fig. 9) acquires the power amount $Pw$ for each of the plurality of electrolyzers 90 (see Fig. 1) to produce the product P. An electrolyzer specification step S316 is a step in which the electrolyzer specification unit 52 (see Fig. 9) specifies the electrolyzer 90 having the maximum power amount $Pw$ among the plurality of electrolyzers 90.

In the period specification step S318, the period specification unit 30 may specify timing (the time t2 in Fig. 6), at which the cost C calculated in the cost calculation step S304 is minimized, in the period T. As a result, the user of the operation assistance method can know the period T during which the ion exchange membrane 84 (see Fig. 3) can be updated and the time t2 of the period T at which the cost C is minimized.

In the electrolyzer specification step S316, the electrolyzer specification unit 52 (see Fig. 9) specifies the electrolyzer 90 having the maximum power amount $Pw$ among the plurality of electrolyzers 90. As a result, the user of the operation assistance method can know the electrolyzer 90 (see Fig. 1) for which it is preferable to update the ion exchange membrane 84 (see Fig. 3). As described above, in the period specification step S318, the user of the operation assistance method can know the period T during which the ion exchange membrane 84 can be updated. As a result, the user of the operation assistance method can update the ion exchange membrane 84 in the period T.

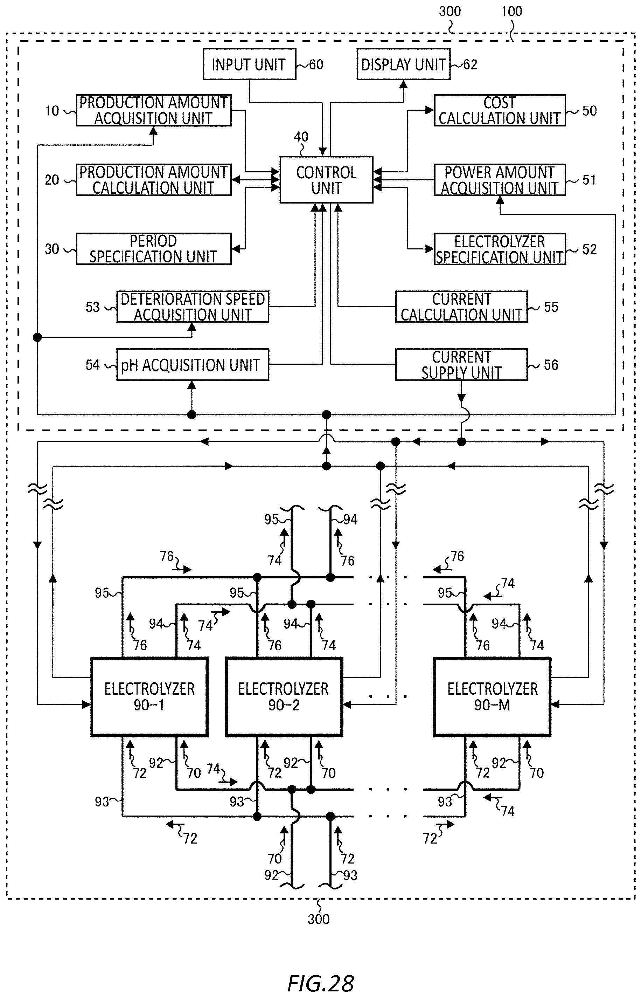

Fig. 28 is a diagram illustrating an example of an operation assistance system 300 according to one embodiment of the present invention. The operation assistance system 300 includes the operation assistance apparatus 100 and one or more electrolyzers 90 (in the present example, the electrolyzers 90-1 to 90-M). In Fig. 28, the range of the operation assistance apparatus 100 is indicated by a rough broken line portion, and the range of the operation assistance system 300 is indicated by a fine broken line portion.

Various embodiments of the present invention may be described with reference to a flowchart and a block diagram. According to the various embodiments of the present invention, a block may represent (1) a step of a process where operations are executed or (2) a section of an apparatus having a role for executing operations.

A specific step may be executed by a dedicated circuit, a programmable circuit, or a processor. A specific section may be implemented by a dedicated circuit, a programmable circuit, or a processor. The programmable circuit and the processor may be supplied together with a computer readable instruction. The computer readable instruction may be stored on a computer readable medium.

The dedicated circuit may include at least one of a digital hardware circuit and an analog hardware circuit. The dedicated circuit may include at least one of an integrated circuit (IC) and a discrete circuit. The programmable circuit may a hardware circuit including include logical AND, logical OR, logical XOR, logical NAND, logical NOR, and other logical operations. The programmable circuit may include a reconfigurable hardware circuit including a flip-flop, a register, a memory element such as a field programmable gate array (FPGA) and a programmable logic array (PLA), and the like.

A computer readable medium may include any tangible device that can store instructions to be executed by a suitable device. Since the computer readable medium includes the tangible device, the computer readable medium having the instruction stored on the device constitutes a product including an instruction that may be executed in order to provide means to execute an operation specified by a flowchart or a block diagram.

The computer readable medium may be, for example, an electronic storage medium, a magnetic storage medium, an optical storage medium, an electromagnetic storage medium, a semiconductor storage medium, or the like. More specifically, for example, the computer readable medium may be a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include any of an assembler instruction, an instruction-set-architecture (ISA) instruction, a machine instruction, a machine dependent instruction, a microcode, a firmware instruction, state-setting data, a source code, and an object code. The source code and the object code may be written in any combination of one or more programming languages including an object oriented programming language and a procedural programming language in related art. The object oriented programming language may be, for example, Smalltalk (registered trademark), JAVA (registered trademark), C++, or the like. The procedural programming language may be, for example, a "C" programming language.

The computer readable instruction may be provided to a general purpose computer, a special purpose computer, or a processor or a programmable circuit of another programmable data processing apparatus locally or via a local area network (LAN) or a wide area network (WAN) such as the Internet. The processor or programmable circuit of a general purpose computer, a special purpose computer, or another programmable data processing apparatus may execute a computer-readable instruction in order to make means for performing the operation specified in the flowchart illustrated in Fig. 11 to 13 or the block diagram illustrated in Fig. 4. The processor may be, for example, a computer processor, a processing unit, a microprocessor, a digital signal processor, a controller, a microcontroller, or the like.

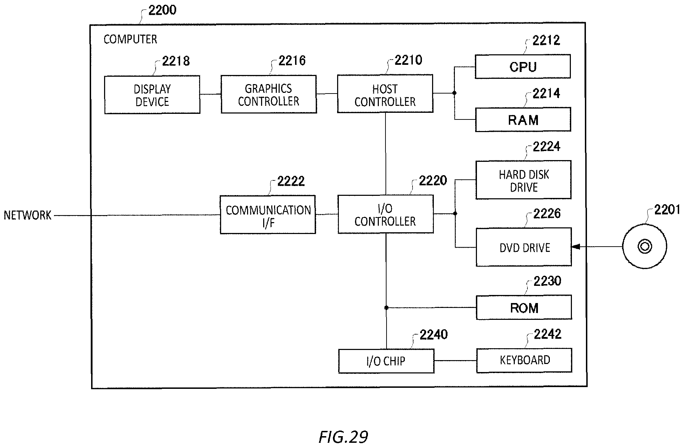

Fig. 29 is a diagram illustrating an example of a computer 2200 in which the operation assistance apparatus 100 according to an embodiment of the present invention may be embodied in whole or in part. The program installed in the computer 2200 can cause the computer 2200 to function as the operation associated with the operation assistance apparatus 100 according to an embodiment of the present invention or one or more sections of the operation assistance apparatus 100, or to perform the operation or the one or more section, or cause the computer 2200 to perform each step according to the operation assistance method of the present invention (see Figs. 23 and 25 to 27). The program may be performed by the CPU 2212 in order to cause the computer 2200 to perform a particular operation associated with some or all of the blocks in the flowchart (Figs. 23 and 25 to 27) and the block diagram (Figs. 5 and 7 to 9) described in this specification.

The computer 2200 according to the present embodiment includes a CPU 2212, a RAM 2214, a graphics controller 2216, and a display device 2218. The CPU 2212, the RAM 2214, the graphics controller 2216, and the display device 2218 are mutually connected by a host controller 2210. The computer 2200 further includes input and output units such as a communication interface 2222, a hard disk drive 2224, a DVD-ROM drive 2226, and an IC card drive. The communication interface 2222, the hard disk drive 2224, the DVD-ROM drive 2226, and the IC card drive, and the like are connected to the host controller 2210 via an input and output controller 2220. The computer further includes legacy input and output units such as a ROM 2230 and a keyboard 2242. The ROM 2230, the keyboard 2242, and the like are connected to the input and output controller 2220 through an input and output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in the RAM 2214 itself to cause the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads the programs or the data from the DVD-ROM 2201, and provides the read programs or data to the hard disk drive 2224 via the RAM 2214. The IC card drive reads programs and data from an IC card, or writes programs and data to the IC card.

The ROM 2230 stores a boot program or the like executed by the computer 2200 at the time of activation, or a program depending on the hardware of the computer 2200. The input and output chip 2240 may connect various input and output units via a parallel port, a serial port, a keyboard port, a mouse port, or the like to the input and output controller 2220.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and various types of hardware resources. An apparatus or method may be constituted by realizing the operation or processing of information in accordance with the usage of the computer 2200.

For example, when a communication is performed between the computer 2200 and an external device, the CPU 2212 may execute a communication program loaded onto the RAM 2214 to instruct communication processing to the communication interface 2222, on the basis of the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

The CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, or the like. The CPU 2212 may perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search or replace of information, or the like, as described throughout the present disclosure and designated by an instruction sequence of programs. The CPU 2212 may write the result back to the RAM 2214.

The CPU 2212 may search for information in a file, a database, or the like in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, read the attribute value of the second attribute stored in the entry, and read a second attribute value to obtain the attribute value of the second attribute associated with the first attribute satisfying the predetermined condition.

The above-explained program or software modules may be stored in the computer readable media on the computer 2200 or of the computer 2200. A recording medium such as a hard disk or a RAM provided in a server system connected to a dedicated communication network or the Internet can be used as the computer readable media. The program may be provided to the computer 2200 by the recording medium.

EXPLANATION OF REFERENCES

10: production amount acquisition unit; 20: production amount calculation unit; 21: operation condition inference model; 30: period specification unit; 40: control unit; 50: cost calculation unit; 51: power amount acquisition unit; 52: electrolyzer specification unit; 53: deterioration speed acquisition unit; 54: pH acquisition unit; 55: current calculation unit; 56: current supply unit; 60: input unit; 62: display unit; 63: option; 64: designation unit; 65: option; 66: first selection unit; 67: second selection unit; 70: liquid; 71: cation; 72: liquid; 73: liquid; 74: liquid; 75: liquid; 76: liquid; 77: gas; 78: gas; 79: anode chamber; 80: anode; 82: cathode; 84: ion exchange membrane; 86: anion group; 90: electrolyzer; 91: electrolysis cell; 92: introduction tube; 93: introduction tube; 94: discharge tube; 95: discharge tube; 98: cathode chamber; 100: operation assistance apparatus; 200: electrolytic apparatus; 2200: computer; 2201: DVD-ROM; 2210: host controller; 2212: CPU; 2214: RAM; 2216: graphic controller; 2218: display device; 2220: input/output controller; 2222: communication interface; 2224: hard disk drive; 2226: DVD-ROM drive; 2230: ROM; 2240: input/output chip; and 2242: keyboard.

**Claims**

1. An operation assistance apparatus (100) comprising:

   a production amount acquisition unit (10) which acquires a target production amount of a product produced in a predetermined period by one electrolyzer (90) or a plurality of electrolyzers (90-1 to 90-M);
   a production amount calculation unit (20) which calculates a maximum production amount of the product when an ion exchange membrane (84) included in the one electrolyzer (90) or the plurality of electrolyzers (90-1 to 90-M) is updated, the maximum production amount being a maximum production amount of the product produced in the period by the one electrolyzer (90) or the plurality of electrolyzers (90-1 to 90-M);
   a cost calculation unit (50) which calculates a cost related to functioning of the one electrolyzer (90) or the plurality of electrolyzers (90-1 to 90-M); and
   a period specification unit (30) which specifies the period during which the maximum production amount becomes equal to or more than the target production amount and specifies timing, at which the cost is minimized, in the period during which the maximum production amount becomes equal to or more than the target production amount,
   wherein the operation assistance allows a user to know the period during which the ion exchange membrane (84) can be updated.

2. The operation assistance apparatus (100) according to claim 1, wherein

   the plurality of electrolyzers (90-1 to 90-M) each include an anode chamber (79) and a cathode chamber (98) partitioned by the ion exchange membrane (84), and
   an aqueous solution of an alkali metal chloride is introduced into the anode chamber (79), and an aqueous solution of an alkali metal hydroxide is discharged from the cathode chamber (98), the operation assistance apparatus further comprising:

a current calculation unit (55) which calculates current which is supplied to each of the plurality of electrolyzers (90-1 to 90-M) and at which a production amount of the product produced in the period by the plurality of electrolyzers (90-1 to 90-M) is maximized, a power amount consumed in the period by the plurality of electrolyzers (90-1 to 90-M) is minimized, mass of an alkali metal chloride, which is introduced into the anode chamber (79) and is contained in the aqueous solution of the alkali metal hydroxide discharged from the cathode chamber (98), is minimized, or mass of oxygen contained in chlorine discharged from the anode chamber (79) is minimized; and
a current supply unit (56) which supplies the current calculated by the current calculation unit (55) to each of the plurality of electrolyzers (90-1 to 90-M).

3. The operation assistance apparatus (100) according to claim 2, further comprising:

a power amount acquisition unit (51) which acquires a power amount for each of the plurality of electrolyzers (90-1 to 90-M) to produce the product, wherein
the current calculation unit (55) calculates current at which the production amount of the product is maximized or the mass of the alkali metal chloride or the mass of the oxygen is minimized when the power amount is less than a predetermined power amount.

4. The operation assistance apparatus (100) according to claim 3, further comprising an electrolyzer specification unit (52) which specifies an electrolyzer, of which the power amount is maximum, among the plurality of electrolyzers (90-1 to 90-M).

5. The operation assistance apparatus (100) according to claim 4, wherein

the power amount acquisition unit (51) acquires the power amount in total in the plurality of electrolyzers (90-1 to 90-M), and
the electrolyzer specification unit (52) specifies the electrolyzer, of which the power amount is maximum, when the power amount in total in the period is minimum.

6. The operation assistance apparatus (100) according to claim 2 or 3, further comprising an electrolyzer specification unit (52) which specifies an electrolyzer, of which current efficiency of the electrolyzer is the lowest, among the plurality of electrolyzers (90-1 to 90-M).

7. The operation assistance apparatus (100) according to claim 2, wherein the current calculation unit (55) calculates current at which the production amount of the product is maximized or the power amount is minimized when the mass of the alkali metal chloride or the mass of the oxygen is at less than a predetermined concentration.

8. The operation assistance apparatus (100) according to claim 2 or 7, wherein the current calculation unit (55) calculates the current, at which a total production amount of the product by the plurality of electrolyzers (90-1 to 90-M) in the period is maximized, supplied to each of the plurality of electrolyzers (90-1 to 90-M).

9. The operation assistance apparatus (100) according to any one of claims 2, 7, and 8, further comprising

an electrolyzer specification unit (52), wherein
the production amount acquisition unit (10) further acquires a production amount of the product produced in the period by each of the plurality of electrolyzers (90-1 to 90-M),
the production amount calculation unit (20) further calculates the production amount of the product produced in the period by each of the plurality of electrolyzers (90-1 to 90-M), and
the electrolyzer specification unit (52) specifies an electrolyzer, of which the ion exchange membrane (84) is to be updated, among the plurality of electrolyzers (90-1 to 90-M) on a basis of the production amount of the product acquired by the production amount acquisition unit (10) and the production amount of the product calculated by the production amount calculation unit (20).

10. The operation assistance apparatus (100) according to claim 9, wherein the electrolyzer specification unit (52) specifies an electrolyzer (90), in which the production amount of the product acquired by the production amount acquisition unit (10) is minimum, among the plurality of electrolyzers (90-1 to 90-M).

11. The operation assistance apparatus (100) according to any one of claims 4 to 6, 9, and 10, wherein

an aqueous solution of an alkali metal chloride is discharged from the anode chamber (79), the operation assistance apparatus further comprising
a pH acquisition unit (54) which acquires a pH of the aqueous solution of the alkali metal chloride introduced into the anode chamber (79) and a pH of the aqueous solution of the alkali metal chloride discharged from the anode chamber (79), wherein
the electrolyzer specification unit (52) specifies an electrolyzer, of which the ion exchange membrane (84) is to be updated, among the plurality of electrolyzers (90-1 to 90-M) on a basis of the pH of the aqueous solution of the alkali metal chloride acquired by the pH acquisition unit (54).

12. An operation assistance system comprising: the operation assistance apparatus (100) according to any one of claims 1 to 11; and the one electrolyzer (90) or the plurality of electrolyzers (90-1 to 90-M).

13. An operation assistance method comprising:

acquiring, by a production amount acquisition unit (10), a production amount by acquiring a target production amount of a product produced in a predetermined period by one electrolyzer (90) or a plurality of electrolyzers (90-1 to 90-M);
calculating, by a production amount calculation unit (20), a maximum production amount of the product when an ion exchange membrane (84) included in the one electrolyzer (90) or the plurality of electrolyzers (90-1 to 90-M) is updated, the maximum production amount being a maximum production amount of the product produced in the period by the one electrolyzer (90) or the plurality of electrolyzers (90-1 to 90-M);
calculating a cost related to functioning of the one electrolyzer (90) or the plurality of electrolyzers (90-1 to 90-M); and
specifying, by a period specification unit (30), a period during which the maximum production amount becomes equal to or more than the target production amount, in the predetermined period, and specifying timing, at which the cost is minimized, in the period during which the maximum production amount becomes equal to or more than the target production amount,
wherein the operation assistance allows a user to know the period during which the ion exchange membrane (84) can be updated.

14. An operation assistance program that causes a computer to execute operations comprising:

a production amount acquisition function of acquiring a production amount by acquiring a target production amount of a product produced in a predetermined period by one electrolyzer (90) or a plurality of electrolyzers (90-1 to 90-M);
a production amount calculation function of calculating a production amount by calculating a maximum production amount of the product when an ion exchange membrane (84) included in the one electrolyzer (90) or the plurality of electrolyzers (90-1 to 90-M) is updated, the maximum production amount being a maximum production amount of the product produced in the period by the one electrolyzer (90) or the plurality of electrolyzers (90-1 to 90-M);
a cost calculation function of calculating a cost related to functioning of the one electrolyzer (90) or the plurality of electrolyzers (90-1 to 90-M) and
a period specification function of specifying the period during which the maximum production amount becomes equal to or more than the target production amount and specifying timing, at which the cost is minimized, in the period during which the maximum production amount becomes equal to or more than the target production amount,
wherein the operation assistance allows a user to know the period during which the ion exchange membrane (84) can be updated.

**Patentansprüche**

1. Bedienungsassistenzeinrichtung (100), umfassend:

eine Produktionsmengenerfassungseinheit (10), die eine Zielproduktionsmenge eines Produkts erfasst, das in einem vorbestimmten Zeitraum von einem Elektrolyseur (90) oder einer Vielzahl von Elektrolyseuren (90-1 bis 90-M) produziert wird;

eine Produktionsmengenberechnungseinheit (20), die eine maximale Produktionsmenge des Produkts berechnet, wenn eine Ionenaustauschmembran (84), die in dem einen Elektrolyseur (90) oder der Vielzahl von Elektrolyseuren (90-1 bis 90-M) eingeschlossen ist, aktualisiert wird, wobei die maximale Produktionsmenge eine maximale Produktionsmenge des Produkts ist, das in dem Zeitraum von dem einen Elektrolyseur (90) oder der Vielzahl von Elektrolyseuren (90-1 bis 90-M) produziert wird;

eine Kostenberechnungseinheit (50), die Kosten berechnet, die mit dem Betrieb des einen Elektrolyseurs (90) oder der Vielzahl von Elektrolyseuren (90-1 bis 90-M) verbunden sind; und

eine Zeitraumspezifikationseinheit (30), die den Zeitraum spezifiziert, in dem die maximale Produktionsmenge gleich oder größer als die Zielproduktionsmenge wird, und den Zeitpunkt spezifiziert, zu dem die Kosten minimiert werden, in dem Zeitraum, in dem die maximale Produktionsmenge gleich oder größer als die Zielproduktionsmenge wird,

wobei die Bedienungsassistenz es einem Benutzer ermöglicht, den Zeitraum zu kennen, in dem die Ionenaustauschmembran (84) aktualisiert werden kann.

2. Bedienungsassistenzeinrichtung (100) nach Anspruch 1, wobei

die Vielzahl von Elektrolyseuren (90-1 bis 90-M) jeweils eine Anodenkammer (79) und eine Kathodenkammer (98) einschließen, die durch die Ionenaustauschmembran (84) getrennt sind, und

eine wässrige Lösung eines Alkalimetallchlorids in die Anodenkammer (79) eingeführt wird und eine wässrige Lösung eines Alkalimetallhydroxids aus der Kathodenkammer (98) abgegeben wird, wobei die Bedienungsassistenzeinrichtung weiter umfasst:

eine Stromberechnungseinheit (55), die den Strom berechnet, der jedem der Vielzahl von Elektrolyseuren (90-1 bis 90-M) zugeführt wird und bei dem eine Produktionsmenge des in dem Zeitraum von der Vielzahl von Elektrolyseuren (90-1 bis 90-M) produzierten Produkts maximiert wird, wobei die in dem Zeitraum von der Vielzahl von Elektrolyseuren (90-1 bis 90-M) verbrauchte Leistungsmenge minimiert wird, die Masse eines Alkalimetallchlorids, das in die Anodenkammer (79) eingeführt wird und in der aus der Kathodenkammer (98) abgegebenen wässrigen Lösung des Alkalimetallhydroxids enthalten ist, minimiert wird, oder die Masse an Sauerstoff, die in dem aus der Anodenkammer (79) abgegebenen Chlor enthalten ist, minimiert wird; und

eine Stromzuführungseinheit (56), die den von der Stromberechnungseinheit (55) berechneten Strom jedem der Vielzahl von Elektrolyseuren (90-1 bis 90-M) zuführt.

3. Bedienungsassistenzeinrichtung (100) nach Anspruch 2, weiter umfassend:

eine Leistungsmengenerfassungseinheit (51), die eine Leistungsmenge für jeden der Vielzahl von Elektrolyseuren (90-1 bis 90-M) zur Produktion des Produkts erfasst, wobei

die Stromberechnungseinheit (55) den Strom berechnet, bei dem die Produktionsmenge des Produkts maximiert ist oder die Masse des Alkalimetallchlorids oder die Masse des Sauerstoffs minimiert ist, wenn die Leistungsmenge kleiner als eine vorbestimmte Leistungsmenge ist.

4. Bedienungsassistenzeinrichtung (100) nach Anspruch 3, weiter umfassend eine Elektrolyseurspezifikationseinheit (52), die einen Elektrolyseur, dessen Leistungsmenge maximal ist, aus der Vielzahl von Elektrolyseuren (90-1 bis 90-M) spezifiziert.

5. Bedienungsassistenzeinrichtung (100) nach Anspruch 4, wobei

die Leistungsmengenerfassungseinheit (51) die Gesamtleistungsmenge in der Vielzahl von Elektrolyseuren (90-1 bis 90-M) erfasst, und

die Elektrolyseurspezifikationseinheit (52) den Elektrolyseur mit der maximalen Leistungsmenge spezifiziert, wenn die Gesamtleistungsmenge in dem Zeitraum minimal ist.

6. Bedienungsassistenzeinrichtung (100) nach Anspruch 2 oder 3, weiter umfassend eine Elektrolyseurspezifikationseinheit (52), die einen Elektrolyseur spezifiziert, dessen Stromwirkungsgrad des Elektrolyseurs der niedrigste ist, unter der Vielzahl von Elektrolyseuren (90-1 bis 90-M).

7. Bedienungsassistenzeinrichtung (100) nach Anspruch 2, wobei die Stromberechnungseinheit (55) den Strom berechnet, bei dem die Produktionsmenge des Produkts maximiert ist oder die Leistungsmenge minimiert ist, wenn die Masse des Alkalimetallchlorids oder die Masse des Sauerstoffs kleiner als eine vorbestimmte Konzentration ist.

8. Bedienungsassistenzeinrichtung (100) nach Anspruch 2 oder 7, wobei die Stromberechnungseinheit (55) den Strom berechnet, bei dem die Gesamtproduktionsmenge des Produkts durch die Vielzahl von Elektrolyseuren (90-1 bis 90-M) in dem Zeitraum maximiert ist, der jedem der Vielzahl von Elektrolyseuren (90-1 bis 90-M) zugeführt wird.

9. Bedienungsassistenzeinrichtung (100) nach einem der Ansprüche 2, 7 und 8, weiter umfassend

eine Elektrolyseurspezifikationseinheit (52), wobei
die Produktionsmengenerfassungseinheit (10) weiter eine Produktionsmenge des in dem Zeitraum von jedem der Vielzahl von Elektrolyseuren (90-1 bis 90-M) produzierten Produkts erfasst,
die Produktionsmengenberechnungseinheit (20) weiter die Produktionsmenge des in dem Zeitraum von jedem der Vielzahl von Elektrolyseuren (90-1 bis 90-M) produzierten Produkts berechnet, und
die Elektrolyseurspezifikationseinheit (52) einen Elektrolyseur, dessen lonenaustauschmembran (84) aktualisiert werden soll, aus der Vielzahl von Elektrolyseuren (90-1 bis 90-M) auf der Grundlage der von der Produktionsmengenerfassungseinheit (10) erfassten Produktionsmenge des Produkts und der von der Produktionsmengenberechnungseinheit (20) berechneten Produktionsmenge des Produkts spezifiziert.

10. Bedienungsassistenzeinrichtung (100) nach Anspruch 9, wobei die Elektrolyseurspezifikationseinheit (52) einen Elektrolyseur (90) aus der Vielzahl von Elektrolyseuren (90-1 bis 90-M) spezifiziert, in dem die von der Produktionsmengenerfassungseinheit (10) erfasste Produktionsmenge des Produkts minimal ist.

11. Bedienungsassistenzeinrichtung (100) nach einem der Ansprüche 4 bis 6, 9 und 10, wobei

eine wässrige Lösung eines Alkalimetallchlorids aus der Anodenkammer (79) abgegeben wird, wobei die Bedienungsassistenzeinrichtung weiter umfasst
eine pH-Erfassungseinheit (54), die einen pH-Wert der in die Anodenkammer (79) eingeführten wässrigen Lösung des Alkalimetallchlorids und einen pH-Wert der aus der Anodenkammer (79) abgegebenen wässrigen Lösung des Alkalimetallchlorids erfasst, wobei
die Elektrolyseurspezifikationseinheit (52) einen Elektrolyseur, dessen lonenaustauschmembran (84) aktualisiert werden soll, aus der Vielzahl von Elektrolyseuren (90-1 bis 90-M) auf der Grundlage des pH-Werts der wässrigen Lösung des Alkalimetallchlorids, der von der pH-Erfassungseinheit (54) erfasst wurde, spezifiziert.

12. Bedienungsassistenzsystem, umfassend: die Bedienungsassistenzeinrichtung (100) nach einem der Ansprüche 1 bis 11; und den einen Elektrolyseur (90) oder die Vielzahl von Elektrolyseuren (90-1 bis 90-M).

13. Bedienungsassistenzverfahren, umfassend:

Erfassen einer Produktionsmenge durch eine Produktionsmengenerfassungseinheit (10) durch Erfassen einer Zielproduktionsmenge eines Produkts, das in einem vorbestimmten Zeitraum durch einen Elektrolyseur (90) oder eine Vielzahl von Elektrolyseuren (90-1 bis 90-M) produziert wurde;
Berechnen einer maximalen Produktionsmenge des Produkts durch eine Produktionsmengenberechnungseinheit (20), wenn eine lonenaustauschmembran (84), die in dem einen Elektrolyseur (90) oder der Vielzahl von Elektrolyseuren (90-1 bis 90-M) enthalten ist, aktualisiert wird, wobei die maximale Produktionsmenge eine maximale Produktionsmenge des Produkts ist, das in dem Zeitraum durch den einen Elektrolyseur (90) oder die Vielzahl von Elektrolyseuren (90-1 bis 90-M) produziert wird;
Berechnen von Kosten, die mit dem Betrieb des einen Elektrolyseurs (90) oder der Vielzahl von Elektrolyseuren (90-1 bis 90-M) verbunden sind; und
Spezifizieren, durch eine Zeitraumspezifikationseinheit (30), eines Zeitraums, in der die maximale Produktionsmenge gleich oder größer als die Zielproduktionsmenge wird, in der vorbestimmten Periode, und Spezifizieren eines Zeitpunkts, zu dem die Kosten minimiert sind, in dem Zeitraum, in dem die maximale Produktionsmenge gleich oder größer als die Zielproduktionsmenge wird,
wobei die Bedienungsassistenz es einem Benutzer ermöglicht, den Zeitraum zu kennen, in dem die lonenaustauschmembran (84) aktualisiert werden kann.

14. Bedienungsassistenzprogramm, das einen Computer veranlasst, Betriebe auszuführen, die umfassen:

eine Produktionsmengenerfassungsfunktion zum Erfassen einer Produktionsmenge durch Erfassen einer Zielproduktionsmenge eines Produkts, das in einem vorbestimmten Zeitraum von einem Elektrolyseur (90) oder einer Vielzahl von Elektrolyseuren (90-1 bis 90-M) produziert wird;

eine Produktionsmengenberechnungsfunktion zum Berechnen einer Produktionsmenge durch Berechnen einer maximalen Produktionsmenge des Produkts, wenn eine in dem einen Elektrolyseur (90) oder der Vielzahl von Elektrolyseuren (90-1 bis 90-M) eingeschlossene lonenaustauschmembran (84) aktualisiert wird, wobei die maximale Produktionsmenge eine maximale Produktionsmenge des in dem Zeitraum durch den einen Elektrolyseur (90) oder die Vielzahl von Elektrolyseuren (90-1 bis 90-M) erzeugten Produkts ist;

eine Kostenberechnungsfunktion zum Berechnen von Kosten, die mit dem Betrieb des einen Elektrolyseurs (90) oder der Vielzahl von Elektrolyseuren (90-1 bis 90-M) verbunden sind und

eine Zeitraumspezifizierungsfunktion zum Spezifizieren des Zeitraums, in dem die maximale Produktionsmenge gleich oder größer als die Zielproduktionsmenge wird, und zum Spezifizieren des Zeitpunkts, zu dem die Kosten minimiert werden, in dem Zeitraum, in dem die maximale Produktionsmenge gleich oder größer als die Zielproduktionsmenge wird,

wobei die Bedienungsassistenz es einem Benutzer ermöglicht, den Zeitraum zu kennen, in dem die lonenaustauschmembran (84) aktualisiert werden kann.

## Revendications

1. Appareil (100) d'assistance à une opération comprenant :

   une unité (10) d'acquisition de quantité de production qui acquiert une quantité de production cible d'un produit qui est produit pendant une période prédéterminée par un electrolyseur (90) ou une pluralité d'électrolyseurs (90-1 à 90-M) ;

   une unité (20) de calcul de quantité de production qui calcule une quantité de production maximale du produit lorsqu'une membrane (84) d'échange d'ions comprise dans l'un électrolyseur (90) ou la pluralité d'électrolyseurs (90-1 à 90-M) est mise à jour, la quantité de production maximale étant une quantité de production maximale du produit qui est produit pendant la période par l'un électrolyseur (90) ou la pluralité d'électrolyseurs (90-1 à 90-M) ;

   une unité (50) de calcul de coût qui calcule un coût relatif au fonctionnement de l'un électrolyseur (90) ou de la pluralité d'électrolyseurs (90-1 à 90-M) ; et

   une unité (30) de spécification de période qui spécifie la période au cours de laquelle la quantité de production maximale devient égale ou supérieure à la quantité de production cible et spécifie un instant auquel le coût est minimisé pendant la période au cours de laquelle la quantité de production maximale devient égale ou supérieure à la quantité de production cible,

   dans lequel l'assistance à une opération permet à un utilisateur de connaître la période au cours de laquelle la membrane (84) d'échange d'ions peut être mise à jour.

2. Appareil (100) d'assistance à une opération selon la revendication 1, dans lequel

   la pluralité d'électrolyseurs (90-1 à 90-M) inclut chacun une chambre (79) d'anode et une chambre (98) de cathode séparées par la membrane (84) d'échange d'ions, et

   une solution aqueuse d'un chlorure de métal alcalin est introduite dans la chambre (79) d'anode, et une solution aqueuse d'un hydroxyde de métal alcalin est évacuée de la chambre (98) de cathode, l'appareil d'assistance à une opération comprenant en outre :

   une unité (55) de calcul de courant qui calcule un courant qui alimente chacun de la pluralité d'électrolyseurs (90-1 à 90-M) et auquel une quantité de production du produit qui est produit pendant la période par la pluralité d'électrolyseurs (90-1 à 90-M) est maximisée, une quantité d'énergie consommée pendant la période par la pluralité d'électrolyseurs (90-1 à 90-M) est minimisée, une masse d'un chlorure de métal alcalin, qui est introduite dans la chambre (79) d'anode et est contenue dans la solution aqueuse de l'hydroxyde de métal alcalin évacué de la chambre (98) de cathode, est minimisée, ou une masse d'oxygène contenue dans du chlore évacué de la chambre (79) d'anode est minimisée ; et

   une unité (56) d'alimentation en courant qui alimente, avec le courant calculé par l'unité (55) de calcul de courant, chacun de la pluralité d'électrolyseurs (90-1 à 90-M).

3. Appareil (100) d'assistance à une opération selon la revendication 2, comprenant en outre :

une unité (51) d'acquisition de quantité d'énergie qui acquiert une quantité d'énergie pour chacun de la pluralité d'électrolyseurs (90-1 à 90-M) pour produire le produit, dans lequel

l'unité (55) de calcul de courant calcule un courant auquel la quantité de production du produit est maximisée ou la masse du chlorure de métal alcalin ou la masse de l'oxygène est minimisée lorsque la quantité d'énergie est inférieure à une quantité d'énergie prédéterminée.

4. Appareil (100) d'assistance à une opération selon la revendication 3, comprenant en outre une unité (52) de spécification d'électrolyseur qui spécifie un électrolyseur, dont la quantité d'énergie est maximale, parmi la pluralité d'électrolyseurs (90-1 à 90-M).

5. Appareil (100) d'assistance à une opération selon la revendication 4, dans lequel

l'unité (51) d'acquisition de quantité d'énergie acquiert la quantité d'énergie au total dans la pluralité d'électrolyseurs (90-1 à 90-M), et

l'unité (52) de spécification d'électrolyseur spécifie l'électrolyseur dont la quantité d'énergie est maximale, lorsque la quantité d'énergie au total pendant la période est minimale.

6. Appareil (100) d'assistance à une opération selon la revendication 2 ou la revendication 3, comprenant en outre une unité (52) de spécification d'électrolyseur qui spécifie un électrolyseur, dont l'efficacité de courant de l'électrolyseur est la plus faible, parmi la pluralité d'électrolyseurs (90-1 à 90-M).

7. Appareil (100) d'assistance à une opération selon la revendication 2, dans lequel l'unité (55) de calcul de courant calcule un courant auquel la quantité de production du produit est maximisée ou la quantité d'énergie est minimisée lorsque la masse du chlorure de métal alcalin ou la masse de l'oxygène est inférieure à une concentration prédéterminée.

8. Appareil (100) d'assistance à une opération selon la revendication 2 ou la revendication 7, dans lequel l'unité de calcul de courant (55) calcule le courant, auquel une quantité de production totale du produit par la pluralité d'électrolyseurs (90-1 à 90-M) pendant la période est maximisée, alimentant chacun de la pluralité d'électrolyseurs (90-1 à 90-M).

9. Appareil (100) d'assistance à une opération selon l'une quelconque des revendications 2, 7 et 8, comprenant en outre

une unité (52) de spécification d'électrolyseur, dans lequel

l'unité (10) d'acquisition de quantité de production acquiert en outre une quantité de production du produit qui est produit pendant la période par chacun de la pluralité d'électrolyseurs (90-1 à 90-M),

l'unité (20) de calcul de quantité de production calcule en outre la quantité de production du produit qui est produit pendant la période par chacun de la pluralité d'électrolyseurs (90-1 à 90-M), et

l'unité (52) de spécification d'électrolyseur spécifie un électrolyseur, dont la membrane (84) d'échange d'ions doit être mise à jour, parmi la pluralité d'électrolyseurs (90-1 à 90-M) sur une base de la quantité de production du produit acquise par l'unité (10) d'acquisition de quantité de production et de la quantité de production du produit calculée par l'unité (20) de calcul de quantité de production.

10. Appareil (100) d'assistance à une opération selon la revendication 9, dans lequel l'unité (52) de spécification d'électrolyseur spécifie un électrolyseur (90), dans lequel la quantité de production du produit acquise par l'unité (10) d'acquisition de quantité de production est minimale, parmi la pluralité d'électrolyseurs (90-1 à 90-M).

11. Appareil (100) d'assistance à une opération selon l'une quelconque des revendications 4 à 6, 9 et 10, dans lequel

une solution aqueuse d'un chlorure de métal alcalin est évacuée de la chambre (79) d'anode, l'appareil d'assistance à une opération comprenant en outre

une unité (54) d'acquisition de pH qui acquiert un pH de la solution aqueuse du chlorure de métal alcalin introduite dans la chambre (79) d'anode et un pH de la solution aqueuse du chlorure de métal alcalin évacuée de la chambre (79) d'anode, dans lequel

l'unité (52) de spécification d'électrolyseur spécifie un électrolyseur, dont la membrane (84) d'échange d'ions doit être mise à jour, parmi la pluralité d'électrolyseurs (90-1 à 90-M) sur une base du pH de la solution aqueuse du chlorure de métal alcalin acquis par l'unité (54) d'acquisition de pH.

12. Système d'assistance à une opération comprenant : l'appareil (100) d'assistance à une opération selon l'une quelconque des revendications 1 à 11 ; et l'un électrolyseur (90) ou la pluralité d'électrolyseurs (90-1 à 90-M).

13. Procédé d'assistance à une opération comprenant :

l'acquisition, par une unité (10) d'acquisition de quantité de production, d'une quantité de production par l'acquisition d'une quantité de production cible d'un produit qui est produit pendant une période prédéterminée par un électrolyseur (90) ou une pluralité d'électrolyseurs (90-1 à 90-M) ;

le calcul, par une unité (20) de calcul de quantité de production, d'une quantité de production maximale du produit lorsqu'une membrane (84) d'échange d'ions comprise dans l'un électrolyseur (90) ou la pluralité d'électrolyseurs (90-1 à 90-M) est mise à jour, la quantité de production maximale étant une quantité de production maximale du produit qui est produit pendant la période par l'un électrolyseur (90) ou la pluralité d'électrolyseurs (90-1 à 90-M) ;

le calcul d'un coût relatif au fonctionnement de l'un électrolyseur (90) ou de la pluralité d'électrolyseurs (90-1 à 90-M) ; et

la spécification, par une unité (30) de spécification de période, d'une période au cours de laquelle la quantité de production maximale devient égale ou supérieure à la quantité de production cible, pendant la période prédéterminée, et la spécification d'un instant auquel le coût est minimisé pendant la période au cours de laquelle la quantité de production maximale devient égale ou supérieure à la quantité de production cible,

dans lequel l'assistance à une opération permet à un utilisateur de connaître la période au cours de laquelle la membrane (84) d'échange d'ions peut être mise à jour.

14. Programme d'assistance à une opération qui amène un ordinateur à exécuter des opérations comprenant :

une fonction d'acquisition de quantité de production consistant à acquérir une quantité de production par l'acquisition d'une quantité de production cible d'un produit qui est produit pendant une période prédéterminée par un électrolyseur (90) ou une pluralité d'électrolyseurs (90-1 à 90-M) ;

une fonction de calcul de quantité de production consistant à calculer une quantité de production par le calcul d'une quantité de production maximale du produit lorsqu'une membrane (84) d'échange d'ions comprise dans l'un électrolyseur (90) ou la pluralité d'électrolyseurs (90-1 à 90-M) est mise à jour, la quantité de production maximale étant une quantité de production maximale du produit qui est produit pendant la période par l'un électrolyseur (90) ou la pluralité d'électrolyseurs (90-1 à 90-M) ;

une fonction de calcul de coût consistant à calculer un coût relatif au fonctionnement de l'un électrolyseur (90) ou de la pluralité d'électrolyseurs (90-1 à 90-M) ; et

une fonction de spécification de période consistant à spécifier la période au cours de laquelle la quantité de production maximale devient égale ou supérieure à la quantité de production cible et à spécifier un instant auquel le coût est minimisé pendant la période au cours de laquelle la quantité de production maximale devient égale ou supérieure à la quantité de production cible,

dans lequel l'assistance à une opération permet à un utilisateur de connaître la période au cours de laquelle la membrane (84) d'échange d'ions peut être mise à jour.

FIG.1

FIG.2

*FIG.3*

FIG.4

INPUT UNIT ~60

DISPLAY UNIT ~62

10 ~ PRODUCTION AMOUNT ACQUISITION UNIT

COST CALCULATION UNIT ~ 50

40

20 ~ PRODUCTION AMOUNT CALCULATION UNIT

CONTROL UNIT

30 ~ PERIOD SPECIFICATION UNIT

BY ELECTROLYZERS 90-1 TO 90-M

100

*FIG.5*

EP 4 307 062 B1

FIG.6

33

FIG.7

FIG.8

INPUT UNIT ~60

DISPLAY UNIT ~62

10 ~ PRODUCTION AMOUNT
ACQUISITION UNIT

COST
CALCULATION UNIT ~ 50

40

20 ~ PRODUCTION AMOUNT
CALCULATION UNIT

CONTROL
UNIT

POWER AMOUNT
ACQUISITION UNIT ~ 51

30 ~ PERIOD
SPECIFICATION UNIT

ELECTROLYZER
SPECIFICATION UNIT ~ 52

53 ~ DETERIORATION SPEED
ACQUISITION UNIT

CURRENT
CALCULATION UNIT ~ 55

54 ~ pH ACQUISITION UNIT

CURRENT
SUPPLY UNIT ~ 56

BY ELECTROLYZERS 90-1
TO 90-M (FIG. 1)

TO ELECTROLYZERS 90-1
TO 90-M (FIG. 1)

100

*FIG.9*

36

| 66 ■FIRST CONDITION Cd1 | | |
|---|---|---|
| 63-1 ◎ POWER AMOUNT Pw | | ~64-1 |
| 63-2 ◎ NaCl/NaOH | | ~64-2 |
| 63-3 ◎ $O_2/Cl_2$ | | ~64-3 |

| 67 ■SECOND CONDITION Cd2 |
|---|
| 65-1 ◎ PRODUCTION AMOUNT Pa (NaOH) MAXIMIZED |
| 65-2 ◎ PRODUCTION AMOUNT Pa ($Cl_2$) MAXIMIZED |
| 65-3 ◎ POWER AMOUNT Pw MINIMIZED |
| 65-4 ◎ NaCl/NaOH MINIMIZED |
| 65-5 ◎ $O_2/Cl_2$ MINIMIZED |

*FIG.10*

66 ■FIRST CONDITION Cd1

| 63-1 | ◎ POWER AMOUNT Pw | | ~64-1 |
| 63-2 | ◎ NaCl/NaOH | | ~64-2 |
| 63-3 | ◎ $O_2/Cl_2$ | | ~64-3 |

67 ■SECOND CONDITION Cd2

| 65-1 | ◎ PRODUCTION AMOUNT Pa (NaOH) MAXIMIZED |
| 65-2 | ◎ PRODUCTION AMOUNT Pa ($Cl_2$) MAXIMIZED |
| 65-3 | ● POWER AMOUNT Pw MINIMIZED |
| 65-4 | ◎ NaCl/NaOH MINIMIZED |
| 65-5 | ◎ $O_2/Cl_2$ MINIMIZED |

*FIG.11*

■OPERATION CONDITION Cda

| ELECTROLYZER | CURRENT | CV | CE | PRODUCTION AMOUNT Pa | POWER AMOUNT Pw |
|---|---|---|---|---|---|
| ELECTROLYZER 90-1 | 12.3 | 3.17 | 93.8 | 66.2 | 150048 |
| ELECTROLYZER 90-2 | 12.3 | 2.95 | 93.8 | 66.2 | 139817 |
| ELECTROLYZER 90-3 | 12.3 | 2.94 | 95.7 | 67.6 | 139160 |
| ELECTROLYZER 90-4 | 12.3 | 3.03 | 95.0 | 67.1 | 143132 |
| ELECTROLYZER 90-5 | 12.3 | 3.01 | 94.2 | 66.5 | 142217 |
| ELECTROLYZER 90-6 | 12.3 | 3.02 | 94.1 | 66.4 | 142855 |
| TOTAL | 73.9 | — | — | 400.0 | 857229 |

■OPTIMAL OPERATION CONDITION Cdb

| ELECTROLYZER | CURRENT | CV | CE | PRODUCTION AMOUNT Pa | POWER AMOUNT Pw |
|---|---|---|---|---|---|
| ELECTROLYZER 90-1 | 9.0 | 3.00 | 93.8 | 48.1 | 103089 |
| ELECTROLYZER 90-2 | 13.5 | 3.00 | 93.8 | 72.5 | 155347 |
| ELECTROLYZER 90-3 | 15.0 | 3.03 | 95.7 | 82.1 | 174471 |
| ELECTROLYZER 90-4 | 12.2 | 3.02 | 95.0 | 66.5 | 141610 |
| ELECTROLYZER 90-5 | 12.3 | 3.01 | 94.2 | 66.4 | 142025 |
| ELECTROLYZER 90-6 | 11.9 | 3.00 | 94.1 | 64.3 | 137629 |
| TOTAL | 73.9 | — | — | 400.0 | 854172 |

*FIG.12*

66 · ■ FIRST CONDITION Cd1

| 63-1 ◎ POWER AMOUNT Pw | | ~64-1 |
|---|---|---|
| 63-2 ◎ NaCl/NaOH | | ~64-2 |
| 63-3 ◎ $O_2$/$Cl_2$ | | ~64-3 |

67 · ■ SECOND CONDITION Cd2

| 65-1 ◎ PRODUCTION AMOUNT Pa (NaOH) MAXIMIZED |
|---|
| 65-2 ◎ PRODUCTION AMOUNT Pa ($Cl_2$) MAXIMIZED |
| 65-3 ◎ POWER AMOUNT Pw MINIMIZED |
| 65-4 ● NaCl/NaOH MINIMIZED |
| 65-5 ◎ $O_2$/$Cl_2$ MINIMIZED |

*FIG.13*

■FIRST CONDITION Cd1

| | | |
|---|---|---|
| ● POWER AMOUNT Pw | Pw1 | ~64-1 |
| ◎ NaCl/NaOH | | ~64-2 |
| ◎ $O_2$/$Cl_2$ | | ~64-3 |

63-1 ● POWER AMOUNT Pw
63-2 ◎ NaCl/NaOH
63-3 ◎ $O_2$/$Cl_2$
66

■SECOND CONDITION Cd2

67

65-1 ● PRODUCTION AMOUNT Pa (NaOH) MAXIMIZED
65-2 ◎ PRODUCTION AMOUNT Pa ($Cl_2$) MAXIMIZED
65-3 ◎ POWER AMOUNT Pw MINIMIZED
65-4 ◎ NaCl/NaOH MINIMIZED
65-5 ◎ $O_2$/$Cl_2$ MINIMIZED

*FIG.14*

66 ■FIRST CONDITION Cd1

| | | |
|---|---|---|
| 63-1 ◉ POWER AMOUNT Pw | Pw1 | ~64-1 |
| 63-2 ◎ NaCl/NaOH | | ~64-2 |
| 63-3 ◎ $O_2/Cl_2$ | | ~64-3 |

67 ■SECOND CONDITION Cd2

| |
|---|
| 65-1 ◎ PRODUCTION AMOUNT Pa (NaOH) MAXIMIZED |
| 65-2 ◎ PRODUCTION AMOUNT Pa ($Cl_2$) MAXIMIZED |
| 65-3 ◎ POWER AMOUNT Pw MINIMIZED |
| 65-4 ◉ NaCl/NaOH MINIMIZED |
| 65-5 ◎ $O_2/Cl_2$ MINIMIZED |

*FIG.15*

□ : CASE OF OPERATION CONDITION Cda

[- - -] : CASE OF OPTIMAL OPERATION CONDITION Cdb

*FIG.16*

**66** ■FIRST CONDITION Cd1

| | | |
|---|---|---|
| 63-1 ◎ POWER AMOUNT Pw | | ~64-1 |
| 63-2 ● NaCl/NaOH | M1 | ~64-2 |
| 63-3 ◎ $O_2$/$Cl_2$ | | ~64-3 |

**67** ■SECOND CONDITION Cd2

| |
|---|
| 65-1 ● PRODUCTION AMOUNT Pa (NaOH) MAXIMIZED |
| 65-2 ◎ PRODUCTION AMOUNT Pa ($Cl_2$) MAXIMIZED |
| 65-3 ◎ POWER AMOUNT Pw MINIMIZED |
| 65-4 ◎ NaCl/NaOH MINIMIZED |
| 65-5 ◎ $O_2$/$Cl_2$ MINIMIZED |

*FIG.17*

**■ FIRST CONDITION Cd1**

66

| | | |
|---|---|---|
| 63-1 ◎ POWER AMOUNT Pw | | ~64-1 |
| 63-2 ● NaCl/NaOH | M1 | ~64-2 |
| 63-3 ◎ $O_2$ /$Cl_2$ | | ~64-3 |

**■ SECOND CONDITION Cd2**

67

| |
|---|
| 65-1 ◎ PRODUCTION AMOUNT Pa (NaOH) MAXIMIZED |
| 65-2 ◎ PRODUCTION AMOUNT Pa ($Cl_2$) MAXIMIZED |
| 65-3 ● POWER AMOUNT Pw MINIMIZED |
| 65-4 ◎ NaCl/NaOH MINIMIZED |
| 65-5 ◎ $O_2$/$Cl_2$ MINIMIZED |

*FIG.18*

———·——— CASE OF OPERATION CONDITION Cda
— — — — — CASE OF OPTIMAL OPERATION CONDITION Cdb

FIG.19

FIRST CONDITION Cd1

21

MEASUREMENT
VALUE Me

OPTIMAL OPERATION
CONDITION Cdb

SECOND CONDITION Cd2

*FIG.20*

*FIG.21*

*FIG.22*

START

MEASUREMENT VALUE Me
ACQUISITION STEP ⟶ S100

PREDICTION VALUE Mp
CALCULATION STEP ⟶ S102

FIRST
CONDITION Cd1 ⟶ OPERATION CONDITION Cda
DERIVING STEP ⟶ S104

SECOND
CONDITION Cd2 ⟶ OPTIMAL OPERATION CONDITION Cdb
DERIVING STEP ⟶ S106

S108 ⟶ DETERMINATION STEP
(DESIRED OPERATION CONDITION
IS SATISFIED?) No

Yes

END

*FIG.23*

50

UPDATE MOMENT
(CASE OF OPERATION CONDITION Cda)

| ELECTROLYZER | OPTIMAL UPDATE MOMENT |
|---|---|
| ELECTROLYZER 90-1 | ○○ YEAR △ MONTH |
| ELECTROLYZER 90-2 | ○○ YEAR △ MONTH |
| ELECTROLYZER 90-3 | ○○ YEAR △ MONTH |
| ELECTROLYZER 90-4 | ○○ YEAR △ MONTH |
| ELECTROLYZER 90-5 | ○○ YEAR △ MONTH |
| ELECTROLYZER 90-6 | ○○ YEAR △ MONTH |

UPDATE MOMENT
(CASE OF OPTIMAL OPERATION CONDITION Cdb)

| ELECTROLYZER | OPTIMAL UPDATE MOMENT |
|---|---|
| ELECTROLYZER 90-1 | ○○ YEAR △ MONTH |
| ELECTROLYZER 90-4 | ○○ YEAR △ MONTH |
| ELECTROLYZER 90-5 | ○○ YEAR △ MONTH |
| ELECTROLYZER 90-2 | ○○ YEAR △ MONTH |
| ELECTROLYZER 90-3 | ○○ YEAR △ MONTH |
| ELECTROLYZER 90-6 | ○○ YEAR △ MONTH |

*FIG.24*

Ti          Ti       Ti     · ·     Ti

| EXECUTE METHOD OF DERIVING OPTIMAL OPERATION CONDITION Cdb (FIG. 23) | EXECUTE METHOD OF DERIVING OPTIMAL OPERATION CONDITION Cdb (FIG. 23) (UPDATE DISTRIBUTION OF CURRENT) | EXECUTE METHOD OF DERIVING OPTIMAL OPERATION CONDITION Cdb (FIG. 23) (UPDATE ION EXCHANGE MEMBRANE 84) | · · · | EXECUTE METHOD OF DERIVING OPTIMAL OPERATION CONDITION Cdb (FIG. 23) (UPDATE CATHODE 82 AND ANODE 80) |
|---|---|---|---|---|
| S200 | S202 | S204 | | S210 |

FIG.25

FIG.26

```
                    ┌─────────────┐
                    │    START    │
                    └──────┬──────┘
                           ▼
          ┌─────────────────────────┐
          │   PRODUCTION AMOUNT     │╌ S300
          │   ACQUISITION STEP      │
          └───────────┬─────────────┘
                      ▼
          ┌─────────────────────────┐
          │   PRODUCTION AMOUNT     │╌ S302
          │   CALCULATION STEP      │
          └───────────┬─────────────┘
                      ▼
          ┌─────────────────────────┐
          │  COST CALCULATION STEP  │╌ S304
          └───────────┬─────────────┘
                      ▼
          ┌─────────────────────────┐
          │   DETERIORATION SPEED   │╌ S306
          │   ACQUISITION STEP      │
          └───────────┬─────────────┘
                      ▼
          ┌─────────────────────────┐
          │   pH ACQUISITION STEP   │╌ S308
          └───────────┬─────────────┘
                      ▼
          ┌─────────────────────────┐
          │        CURRENT          │╌ S310
          │   CALCULATION STEP      │
          └───────────┬─────────────┘
                      ▼
          ┌─────────────────────────┐
          │   CURRENT SUPPLY STEP   │╌ S312
          └───────────┬─────────────┘
                      ▼
          ┌─────────────────────────┐
          │     POWER AMOUNT        │╌ S314
          │   ACQUISITION STEP      │
          └───────────┬─────────────┘
                      ▼
          ┌─────────────────────────┐
          │      ELECTROLYZER       │╌ S316
          │   SPECIFICATION STEP    │
          └───────────┬─────────────┘
                      ▼
          ┌─────────────────────────┐
          │        PERIOD           │╌ S318
          │   SPECIFICATION STEP    │
          └───────────┬─────────────┘
                      ▼
                ┌─────────────┐
                │     END     │
                └─────────────┘
```

*FIG.27*

FIG.28

*FIG.29*

**REFERENCES CITED IN THE DESCRIPTION**

**Patent documents cited in the description**

- JP 2019019408 A
- CN 111926343 A